(19)

Europäisches Patentamt
European Patent Office
Office européen des brevets

(11) **EP 2 942 013 A1**

(12) **EUROPEAN PATENT APPLICATION**
published in accordance with Art. 153(4) EPC

(43) Date of publication:
**11.11.2015 Bulletin 2015/46**

(51) Int Cl.:
**A61B 6/00** *(2006.01)*    **G06T 1/00** *(2006.01)*

(21) Application number: **14746545.4**

(86) International application number:
**PCT/JP2014/052596**

(22) Date of filing: **29.01.2014**

(87) International publication number:
**WO 2014/119800 (07.08.2014 Gazette 2014/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.01.2013 JP 2013016203**

(71) Applicant: **Japan Science and Technology Agency Kawaguchi-shi Saitama 332-0012 (JP)**

(72) Inventors:
• **ARAI, Hitoshi**
  **Tokyo 113-0033 (JP)**
• **UEDA, Takuya**
  **Minami-cho, Chuo-ku**
  **Chiba-shi, Chiba 260-0842 (JP)**
• **TSUNODA, Hiroko**
  **Tokyo 104-8560 (JP)**
• **ARAI, Shinobu**
  **Tokyo 113-0033 (JP)**

(74) Representative: **Cabinet Plasseraud**
  **52, rue de la Victoire**
  **75440 Paris Cedex 09 (FR)**

(54) **IMAGE PROCESSING DIGITAL FILTER, IMAGE PROCESSING DEVICE, PRINTING MEDIUM, RECORDING MEDIUM, IMAGE PROCESSING METHOD AND PROGRAM**

(57)    According to an aspect of the present invention, processed image data in which distortion due to breast cancer is enhanced is generated by performing, on mammographic image data, image processing using a filter that relatively amplifies medium band components between high and low frequency bands and/or a filter that increases or reduces components having predetermined orientations. According to an aspect of the invention, a processed image for supporting breast cancer diagnosis is printed or recorded on a printing medium or a computer-readable recording medium and, in the processed image, band components between high and low frequency bands in a mammographic original image are relatively amplified and/or components having predetermined orientations in the mammographic original image are increased or reduced.

FIG.1

**Description**

Field

The present invention relates to a digital filter for image processing, an image processing apparatus, a printing medium, a recording medium, an image processing method, and a program for supporting breast cancer diagnosis.

Background

There has been an increasing medical and public interest in early diagnosis and treatment of breast cancer. Particularly, large-scale medical tests have revealed that breast cancer screening by mammography improves the prognosis of breast cancer patients and the screening has been promoted world-wide.

In breast cancer screening by mammography, in addition to development of its modality (medical imaging apparatuses), the process of image evaluation referred to as "radiographic interpretation" is important. Image evaluation is performed by doctors who have had certain training. There is the Central Committee for Quality Control established in order to keep the quality of breast cancer screening by mammography, and quality control for maintaining the diagnosis capability by the qualified doctors for radiographic interpretation at a certain level or higher is performed. In mammographic interpretation, there are roughly three factors to be evaluated: the morphology of "tumor ("tumor morphology")" occurring in mammary glands; the distribution and shape of "calcification" representing the characteristic distribution and shape according to the tumor. "Distortion" is another important factor to be evaluated, which is indirect morphological change of the surrounding structure of the tumor affected by the extension and invasion of the breast cancer tumor.

Developments of filters that enhance the density and contrast have been made in order to improve the mammographic image quality (see Non Patent Literature 1 to 6).

Citation List

Non Patent Literature

Non Patent Literature 1: Gorgel P, Sertbas A, Ucan ON. "A Wavelet-based mammographic image denoising and enhancement with homomorphic filtering." J Med Syst. 2010 Nov. 30;34(6):pp. 993-1002.

Non Patent Literature 2: Kilic N, Gorgel P, Ucan ON, Sertbas A, "Mammographic Mass Detection using Wavelets as Input to Neural Networks" J Med Syst. 2010 Nov. 30;34(6):pp. 1083-1088.

Non Patent Literature 3: Regentova E, Zhang L, Zheng J, Veni G. "Detecting microcalcifications in digital mammograms using wavelet domain hidden Markov tree model." Conf Proc IEEE Eng Med Biol Soc. 2006 pp. 1972-1975.

Non Patent Literature 4: Panetta K, Zhou Y, Agaian S, Jia H. "Nonlinear unsharp masking for mammogram enhancement." IEEE Trans Inf Technol Biomed. 2011 Nov; 15 (6) :pp. 918-928.

Non Patent Literature 5: Qian W, Clarke LP, Kallergi M, Clark RA. "Tree-structured nonlinear filters in digital mammography." IEEE Trans Med Imaging. 1994; 13(1):pp. 25-36.

Non Patent Literature 6: Ayres FJ, Rangayyan RM, "Reduction of false positives in the detection of architectural distortion in mammograms by using a geometrically constrained phase portrait model", International Journal of Computer Assisted Radiology and Surgery 2007 1(6):pp. 361-369.

Summary

Technical Problem

As for "calcification", evaluation methods are relatively simple and image evaluation methods have been established, and computer-assisted automatic diagnosis has been actively introduced. As for "tumor morphology", a morphological evaluation process has been established and there are active approaches to development of methods for automatic diagnosis, which has led to a certain result. As for "other findings", however, there is a problem in that, while "other findings" are elements with importance equivalent to that of "calcification" and "tumor", the evaluation process is complicated and no systematic evaluation method has been established. Among "other findings", evaluation on "distortion" has a problem in that, while it is particularly important factors to determine breast cancer diagnosis, it is necessary to accumulate experiences to acquire certain evaluation capability and the evaluation capability varies significantly depending on the experiences.

Particularly, the conventional method according to Non Patent Literature 1 has a problem in that, while image processing is performed using a wavelet etc. in order to improve the mammographic image quality, it is aimed at improving the accuracy of detecting general items, such as "tumor" and "calcification", and, as for filters and image processing methods dedicated to distortion, usability for clinical application is insufficient and there are less advances in clinical applications while reports have been made.

The present invention was made in view of the above-described problems and an object of the present invention is to provide a digital filter for image processing, an image processing apparatus, a printing medium, a recording medium, an image processing method, and a program with which it is possible to perform image processing that enhances distortion due to breast cancer in a mammographic image in order to support breast cancer diagnosis.

Solution to Problem

In order to achieve the objective, according to an aspect of the present invention, a digital filter for image processing for supporting breast cancer diagnosis includes: an image processing unit that generates processed image data in which distortion due to breast cancer is enhanced by performing, on mammographic image data, image processing that relatively amplifies medium band components between high and low frequency bands and/or image processing that increases or reduces components having predetermined orientations.

According to another aspect of the present invention, in the digital filter for image processing described above, the image processing unit includes: a decomposing unit that obtains subband signals by performing multiresolution decomposition on image data with any one of a wavelet frame with orientation selectivity and a filterbank with orientation selectivity, each of which is a set of an approximate filter with no orientation and a plurality of detail filters with respective orientations; and a reconstructing unit that obtains reconstructed image data by reconstructing an image by summing the subband signals obtained by the decomposing unit; and the reconstructing unit obtains the reconstructed image data as the processed image data by attenuating the subband signals corresponding to the filters on a low-frequency side and a high-frequency side from among the filters and/or by amplifying the subband signals corresponding to the filters on a medium frequency side including a relatively low-frequency side and a relatively high-frequency side from among the filters.

According to still another aspect of the present invention, in the digital filter for image processing described above, the frequency characteristics of the filters are specified by the positions in a predetermined filter arrangement based on orientations at each level of the wavelet frame with orientation selectivity and the filterbank with orientation selectivity and/or the level in the multiresolution decomposition.

According to still another aspect of the present invention, in the digital filter for image processing described above, the reconstructing unit relatively attenuates the subband signals corresponding to the approximate filter at a predetermined level in the multiresolution decomposition and attenuates the subband signals corresponding to the detail filters on a high-frequency side from among the detail filters.

According to still another aspect of the present invention, in the digital filter for image processing described above, the decomposing unit attenuates or amplifies the corresponding subband signals by weighting the filters in a decomposition phase and/or a synthesis phase of any one of the wavelet frame with orientation selectivity and the filterbank with orientation selectivity.

According to still another aspect of the present invention, in the digital filter for image processing described above, the reconstructing unit obtains the reconstructed image data by weighting frequency response functions for the respective filters of any one of the wavelet frame with orientation selectivity and the filterbank with orientation selectivity, applying multiplication and addition to the weighted frequency response functions, deriving filter coefficients from the result, and performing filtering on image data by using filters constituted of the filter coefficients.

According to still another aspect of the present invention, in the digital filter for image processing described above, the decomposing unit and the reconstructing unit obtain the reconstructed image data by using a unit impulse response that is obtained in advance in response to a unit impulse signal for the same number of pixels as that of the image data and calculating a cyclic convolution product using the unit impulse response for the image data.

According to still another aspect of the present invention, in the digital filter for image processing described above, any one of the wavelet frame with orientation selectivity and the filterbank with orientation selectivity is a broad-sense pinwheel framelet that has a degree.

According to still another aspect of the present invention, a digital filter for image processing enhances distortion in a mammographic image in order to support breast cancer diagnosis, and the digital filter is a unit impulse response to a unit impulse signal that is obtained, when an image is reconstructed by summing subband signals obtained by performing multiresolution decomposition on the unit impulse signal for the same number of pixels as that of image data with any one of a wavelet frame with orientation selectivity and a filterbank with orientation selectivity, each of which is a set of an approximate filter with no orientation and a plurality of detail filters with respective orientations, by attenuating the subband signals corresponding to the filters on a low-frequency side and a high-frequency side from among the filters and/or by amplifying the subband signals corresponding to the filters on a medium frequency side including a relatively low-frequency side and a relatively high-frequency side from among the filters so as to relatively amplify medium band components between high and low frequency bands and/or so as to increase or reduce components having predetermined orientations and/or by increasing or reducing the subband signals corresponding to the filters that have the predetermined orientations.

According to still another aspect of the present invention, a digital filter for image processing enhances distortion in a mammographic image in order to support breast cancer diagnosis, and the digital filter is created by calculating filter coefficients by weighting, with predetermined weights, frequency response functions for respective filters of any one of a wavelet frame with orientation selectivity and a filterbank with orientation selectivity, each of which is a set of an approximate filter with no orientation and a plurality of detail filters with respective orientations, so as to relatively amplify medium band components between high and low frequency bands and/or increase or reduce components having predetermined orientations and by applying multiplication and addition to the weighted frequency response functions with a predetermined method, and the predetermined weights include a weight that attenuates the subband signals corresponding to the filters on a low-frequency side and a high-frequency side from among the filters and/or a weight that amplifies the subband signals corresponding to the filters on a medium frequency side including a relatively low-frequency side and a relatively high-frequency side and/or a weight that increases or reduces the subband signals corresponding to the filters that have the predetermined orientations.

According to still another aspect of the present invention, an image processing apparatus for supporting breast cancer diagnosis includes a storing unit and a control unit, the storing unit includes: a filter storing unit that stores a filter that relatively amplifies medium band components between high and low frequency bands and/or a filter that increases or reduces components having predetermined orientations; and an image data storing unit that stores image data of a mammographic image; and the control unit includes an image processing unit that generates processed image data in which distortion due to breast cancer is enhanced by performing image processing by using the filter.

According to still another aspect of the present invention, a processed image for supporting breast cancer diagnosis is printed on a printing medium, and in the processed image, medium band components between high and low frequency bands in a mammographic original image are relatively amplified and/or components having predetermined orientations in the mammographic original image are increased or reduced.

According to still another aspect of the present invention, an image data for displaying a processed image for supporting breast cancer diagnosis is recorded on a computer readable medium, and in the processed image, medium band components between high and low frequency bands in a mammographic original image are relatively amplified and/or components having predetermined orientations in the mammographic original image are increased or reduced.

According to still another aspect of the present invention, an image processing method for supporting breast cancer diagnosis is executed by a computer including at least a storing unit and a control unit, the storing unit includes: a filter storing unit that stores a filter that relatively amplifies medium band components between high and low frequency bands and/or a filter that increases or reduces components having predetermined orientations; and an image data storing unit that stores image data of a mammographic image; and the image processing method includes an image processing step of generating processed image data in which distortion due to breast cancer is enhanced by performing image processing on the image data with the filter.

According to still another aspect of the present invention, a program for supporting breast cancer diagnosis is executed by a computer including a storing unit and a control unit, the storing unit includes: a filter storing unit that stores a filter that relatively amplifies medium band components between high and low frequency bands and/or a filter that increases or reduces components having predetermined orientations; and an image data storing unit that stores image data of a mammographic image; and the program causes the control unit to execute an image processing step of generating processed image data in which distortion due to breast cancer is enhanced by performing image processing on the image data with the filter.

The present invention also relates to a recording medium that records the program described above. Advantageous Effects of Invention

According to an aspect of the present invention, in order to support breast cancer diagnosis, a processed image data in which distortion due to breast cancer is enhanced is generated by performing, on mammographic image data, image processing that relatively amplifies medium band components between high and low frequency bands and/or image processing that increases or reduces components having predetermined orientations, which provides an advantage in that it is possible to perform image processing that enhances distortion due to breast cancer in a mammographic image in order to support breast cancer diagnosis. Particularly, low-frequency components are relatively attenuated, which makes it possible to cut extra parts appropriately for detection of distortion, such as a difference in gradation or a general change. Furthermore, high-frequency components are relatively attenuated, which makes it possible to prevent that detection of distortion is hindered due to high frequency components. In other words, relatively attenuating the high and low frequency components and relatively amplifying medium frequency components can enhance the distortion that is an important element in mammographic interpretation in the image, which makes it possible to provide an image in which distortion is easy to view. It is also possible to provide an image in which distortion is easy to view by obtaining a processed image in which mammary glands in specified particular directions are reduced or a processed image in which standard mammary gland direction is extracted in consideration of the characteristics of mammary glands that they are generally radially arranged from the papilla.

Educating specialists in mammography who have certain diagnostic capability and managing the accuracy are considered to lead to improvement in accuracy of breast cancer diagnosis and eventually to lead to improvement in the prognosis of breast cancer patients; however, "other findings" are a field in which the evaluation process is complicated and no systematic evaluation method has been established and, while evaluation on "distortion" is a significantly important element for diagnosis, it is necessary to accumulate experiences to acquire certain evaluation capability and the evaluation capability differs significantly depending on the experiences. In other words, because, while distortion is an important finding to result in breast cancer diagnosis and is heavily involved in the breast cancer diagnosis capability, excessive detection of distortion tends to result in overdiagnosis including a lot of false positives, there is a strong demand for improvement in evaluation capability. There are various factors that make evaluation of distortion difficult and, as fundamental factors, there is an aspect that there are various factors including density, calcification, and normal structure overlapping that relatively exist in mammographic images and it is difficult to evaluate only distortion as an independent element. According to another aspect of the present invention, it is possible to construct image processing dedicated to distortion from a mammographic image, which contributes to improvement in image evaluation capability for distortion and is highly likely to contribute to systemizing of the evaluation process in educating doctors for diagnosis. According to the present invention, there is an advantage in that it is possible to provide computer assistance to evaluation of the important item for breast cancer that is distortion that requires a lot of experiences to learn.

According to still another aspect of the present invention, in the above-described image processing, when reconstructed image data is obtained by obtaining subband signals by performing, on image data, multiresolution decomposition with any one of a wavelet frame with orientation selectivity and a filterbank with orientation selectivity, each of which is a set of an approximate filter with no orientation and a plurality of detail filters with respective orientations, and reconstructing an image by summing the subband signals, the reconstructed image data is obtained as the processed image data by attenuating the subband signals corresponding to the filters on a low-frequency side and a high-frequency side from among the filters and/or by amplifying the subband signals corresponding to the filters on a medium frequency side including a relatively low-frequency side and a relatively high-frequency side from among the filters and/or by increasing or reducing the subband signals corresponding to the filters that have the predetermined orientations, which provides an advantage in that, with band-pass filters that can enhance medium frequency components in an image by multi-resolution decomposition, it is possible to provide a processed image from which parts where it is difficult to find distortion due to high-frequency noise and high-frequency components and extra parts including a general change have been removed and thus in which distortion is found easily. Furthermore, the present invention provides an advantage in that it is possible to provide an image in which distortion is viewed easily by reducing mammary glands in a predetermined direction or by extracting the standard mammary gland direction with filters having predetermined orientations in consideration of the characteristics of mammary glands that they are generally radially arranged from the papilla.

According to still another aspect of the present invention, the frequency characteristics of the filters are specified by the positions in a predetermined filter arrangement based on an orientation at each level of the wavelet frame with orientation selectivity and the filterbank with orientation selectivity and/or the level in the multiresolution decomposition, which provides an advantage in that it is possible to specify various medium frequency characteristics.

According to an aspect of the present invention, the reconstructing unit relatively attenuates the subband signals corresponding to the approximate filter at a predetermined level in the multiresolution decomposition and attenuates the subband signals corresponding to the detail filters on a high-frequency side from among the detail filters, which provides an advantage in that it is possible to cut out, using multiresolution decomposition, low-frequency components corresponding to a difference in gradation or a general change, and high-frequency noise and high-frequency components that make it difficult to detect distortion in a mammographic image.

According to still another aspect of the present invention, the corresponding subband signals are attenuated or amplified by weighting the filters in a decomposition phase and/or a synthesis phase of any one of the wavelet frame with orientation selectivity and the filterbank with orientation selectivity, which provides an effect in that it is possible to realize filters for supporting breast cancer diagnosis that have various medium frequency characteristics.

According to still another aspect of the present invention, the reconstructed image data is obtained by weighting frequency response functions for the respective filters of any one of the wavelet frame with orientation selectivity and the filterbank with orientation selectivity, applying multiplication and addition to the weighted frequency response functions, deriving filter coefficients from the result, and performing filtering on the image data by using filters constituted of the filter coefficients, which provides an advantage in that it is possible to calculate an output by fast filtering.

According to still another aspect of the present invention, the reconstructed image data is obtained by using a unit impulse response that is obtained in advance in response to a unit impulse signal for the same number of pixels as that of the image data and calculating a cyclic convolution product using the unit impulse response for the image data, which provides an advantage in that it is possible to calculate an output by fast filtering using the unit impulse response prepared in advance.

According to still another aspect of the present invention, a broad-sense pinwheel framelet that has a degree is used as any one of the wavelet frame with orientation selectivity and the filterbank with orientation selectivity, which provides an advantage in that, using a pinwheel framelet that is constructed as a human visual mathematical model, or the like, it is possible to perform image processing that enhances distortion with an evaluation algorithm close to visual image evaluation in mammographic interpretation by medical specialists.

According to still another aspect of the present invention, a filter for image processing is a unit impulse response to a unit impulse signal that is obtained, when an image is reconstructed by summing subband signals obtained by performing multiresolution decomposition on the unit impulse signal for the same number of pixels as that of image data with any one of a wavelet frame with orientation selectivity and a filterbank with orientation selectivity, each of which is a set of an approximate filter with no orientation and a plurality of detail filters with respective orientations, by attenuating the subband signals corresponding to the filters on a low-frequency side and a high-frequency side from among the filters and/or by amplifying the subband signals corresponding to the filters on a medium frequency side including a relatively low-frequency side and a relatively high-frequency side from among the filters so as to relatively amplify band components between high and low frequency bands and/or so as to increase or reduce components having predetermined orientations and/or by increasing or reducing the subband signals corresponding to the filters that have the predetermined orientations. Accordingly, the present invention provides an advantage in that it is possible to provide a digital filter for image processing capable of, in order to support breast cancer diagnosis, performing image processing that enhances distortion due to breast cancer in a mammographic image and quickly calculating a filter output.

According to still another aspect of the present invention, in a digital filter for image processing that enhances distortion in a mammographic image in order to support breast cancer diagnosis, the digital filter being created by calculating filter coefficients by weighting, with predetermined weights, frequency response functions for respective filters of any one of a wavelet frame with orientation selectivity and a filterbank with orientation selectivity, each of which is a set of an approximate filter with no orientation and a plurality of detail filters with respective orientations, so as to relatively amplify band components between high and low frequency bands and/or increase or reduce components having predetermined orientations and by applying multiplication and addition to the weighted frequency response functions with a predetermined method, the predetermined weights include a weight that attenuates the subband signals corresponding to the filters on a low-frequency side and a high-frequency side from among the filters and/or a weight that amplifies the subband signals corresponding to the filters on a medium-frequency side including a relatively low-frequency side and a relatively high-frequency side and/or a weight that increases or reduces the subband signals corresponding to the filters that have the predetermined orientations. Accordingly, the invention can provide an advantage in that it is possible to provide a digital filter for image processing capable of, in order to support breast cancer diagnosis, performing image processing that enhances distortion due to breast cancer and quickly calculating a filter output.

According to still another aspect of the present invention, in any one of a computer-readable recording medium in which image data for displaying a processed image for supporting breast cancer diagnosis is recorded and a printing medium on which the processed image is printed, in the processed image, medium band components between high and low frequency bands in a mammographic original image are relatively amplified and/or components having predetermined orientations in the mammographic original image are increased or reduced, which provides an advantage in that it is possible to support breast cancer diagnosis by presenting the processed image.

Brief Description of Drawings

FIG. 1 is a block diagram illustrating an example of the configuration of an image processing apparatus to which an embodiment of the present invention is applied.

FIG. 2 is a diagram illustrating an example of filters obtained by calculating the cyclic correlation product of maximal overlap pinwheel framelet filters at level 3 of degree 5 and maximal overlap pinwheel framelet approximate filters at level 1 and level 2 of degree 5.

FIG. 3 is a diagram illustrating filters obtained by calculating the cyclic correlation product of maximal overlap pinwheel framelet filters at level 2 (high-frequency side) of degree 7 and a maximal overlap pinwheel framelet approximate filter at level 1.

FIG. 4 is a diagram illustrating filters obtained by calculating the cyclic correlation product of maximal overlap pinwheel framelet filters at level 3 (low-frequency side) of degree 7 and maximal overlap pinwheel framelet approximate filters at level 1 and level 2.

FIG. 5 is a diagram in which an approximate part is represented by $a_k$ and detail parts are represented by symbols (numbers) of $d_k(1)$ to $d_k(99)$ in the pinwheel framelet at level k of degree 7.

FIG. 6 is a diagram representing coefficients applied in association with the array of filters in FIG. 5.

FIG. 7 is a flowchart illustrating an example of processing by an image processing apparatus 100 in the embodiment.

FIG. 8 is a diagram illustrating an example of filterbanks in the decomposition phase and the synthesis phase of the maximal overlap multiresolution decomposition.

FIG. 9 is a flowchart illustrating an example of specific processing performed by the image processing apparatus 100 according to the embodiment.

FIG. 10 illustrates filters that are obtained by calculating the cyclic correlation product of maximal overlap pinwheel framelet filters at level 2 of degree 7 and a maximal overlap pinwheel framelet approximate filter at level 1 of degree 7.

FIG. 11 is a diagram illustrating a part of the graph of a DiWI-PW7 filter that is taken out about a part having a significant change.

FIG. 12 is a diagram representing the frequency characteristics of the DiWI-PW7 filters.

FIG. 13 is a graph of the frequency characteristics of the DiWI-PW7 filter.

FIG. 14 is a diagram representing a mammographic image of Sample 1.

FIG. 15 is a diagram representing an image diwi that is taken out.

FIG. 16 is a diagram representing an image DiWI that is obtained by performing scaling processing on the image diwi shown in FIG. 15.

FIG. 17 is a diagram representing the lightness histogram of the image diwi.

FIG. 18 is a diagram representing the lightness histogram of the image DiWI.

FIG. 19 is a diagram of an image obtained by summing the mammographic image (FIG. 14) and the processed image DiWI according to an appropriate ratio.

FIG. 20 is a diagram representing the result of appropriately performing scaling on FIG. 15 and then coloring it.

FIG. 21 is a diagram representing a mammographic image of Sample 2.

FIG. 22 is a diagram representing a processed image DiWI of Sample 2.

FIG. 23 is a diagram representing an image obtained by summing the mammographic image (FIG. 21) and the processed image DiWI (FIG. 22) according to an appropriate ratio.

FIG. 24 is a diagram representing a mammographic image of Sample 3.

FIG. 25 is a diagram representing a processed image DiWI of Sample 3.

FIG. 26 is a diagram representing an image obtained by summing the mammographic image (FIG. 24) and the processed image DiWI (FIG. 25) according to an appropriate ratio.

FIG. 27 is a diagram representing a processed image in which the standard mammary gland direction is reduced and that is created by relatively amplifying the band components between the high and low frequency bands in FIG. 14 and further relatively attenuating the components having the standard mammary gland direction.

FIG. 28 is a diagram representing an image in which the standard mammary gland direction is extracted and that is created by relatively amplifying the band components between the high and low frequency bands in FIG. 21 and further relatively amplifying the components having the standard mammary gland direction.

FIG. 29 is a diagram representing a diagram obtained by arraying the processed images obtained by processing the left and right mammographic original images in FIGS. 21 and 24.

FIG. 30 is a diagram representing an image obtained by superimposing the relatively low frequency part in FIG. 21 onto the diwi (the image before scaling) in FIG. 21 according to an appropriate ratio and appropriately performing scaling thereon.

FIG. 31 is a diagram illustrating filters obtained by calculating the cyclic correlation product of maximal overlap pinwheel framelet filters at level 2 and an approximate filter at level 1.

FIG. 32 is a diagram illustrating each subband signal of the result obtained by performing the 2nd stage of maximal overlap MRA decomposition by a pinwheel framelet on an image composed of line segments in various directions.

Description of Embodiments

An embodiment of a digital filter for image processing, an image processing apparatus, a printing medium, a recording medium, an image processing method, and a program according to the present invention will be described in detail below according to the drawings. The digital filter for image processing according to the present invention has a function of generating processed image data in which distortion due to breast cancer is enhanced by performing, on mammographic image data, image processing that relatively amplifies medium band components between high and low frequency bands and/or image processing that increases and reduces components having predetermined orientations. For the following embodiment, in some cases, descriptions will be provided for exemplary creation of filters that relatively amplify the band components between the high and low frequency bands and exemplary image processing; however, they do not limit the embodiment and, for example, known band-pass filters, a method of creating the band-pass filters, and a known image processing technology relating to spatial frequency can be used.

[Configuration of Image Processing Apparatus]

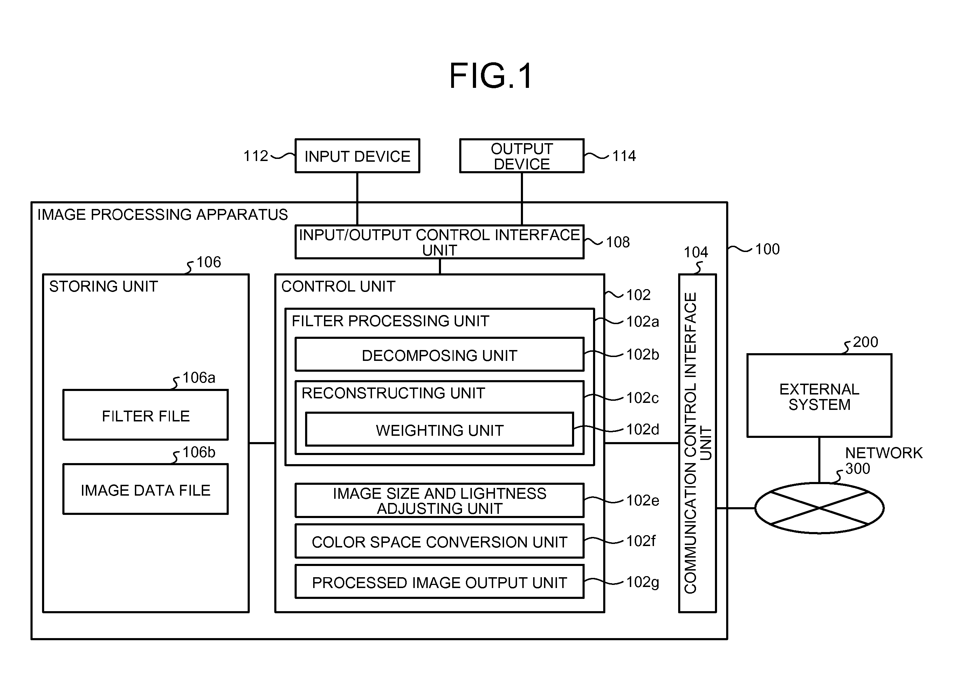

The configuration of the image processing apparatus will be described with reference to FIG. 1. FIG. 1 is a block diagram illustrating an example of the configuration of the image processing apparatus to which the embodiment is applied, schematically illustrating only a part of the configuration relevant to the embodiment.

According to the embodiment, an image processing apparatus 100 has a function of generating processed image data in which the distortion due to breast cancer is enhanced by performing, on mammographic image data, image processing that relatively amplifies the medium band components between the high and low frequency bands and/or image processing that increases and reduces the components that are extracted from filters having predetermined orientations. A part or all of the functions of the image processing apparatus 100 may function as a digital filter, a storing unit 106 of the image processing apparatus 100 to be described below may store functions of the digital filter, etc., and the image processing apparatus 100 may execute filter processing.

In FIG. 1, the image processing apparatus 100 is schematically illustrated as including a control unit 102, a communication control interface unit 104, an input/output control interface unit 108, and the storing unit 106. The control unit 102 is, for example, a CPU that performs overall control of the image processing apparatus 100. The input/output control interface unit 108 is an interface connected to an input device 112 and an output device 114. The storing unit 106 is a device that stores, for example, various databases and tables. These units of the image processing apparatus 100 are communicatively connected via any desired communication channel.

Various files (a filter file 106a and an image data file 106b) stored in the storing unit 106 are a storage unit, such as a fixed disk drive. For example, the storing unit 106 stores various programs, tables, files, databases, web pages, and the like used for various processes.

Among these components of the storing unit 106, the filter file 106a is a filter storing unit that stores filters for performing image processing that relatively amplifies the medium band components between the high and low frequency bands and/or filters that increases and reduces predetermined components having predetermined orientations. In a case where components having predetermined orientations are not increased or reduced in the embodiment, filters to be used are not limited to a wavelet frame, a filterbank with orientation selectivity to be described below, or the like, as long as they have frequency characteristics of the band between the high and low frequency bands, i.e., any band-pass filters may be used. The filter file 106a stores wavelet frames with orientation selectivity or filterbanks with orientation selectivity, which are each a set of an approximate filter with no orientation and a plurality of detail filters with respective orientations. In the embodiment, the "wavelet" is not limited to a classical wavelet, a wavelet in a narrow sense, or the like, and includes a wavelet in a broad sense. For example, the wavelet is a finite-length waveform or a wave-like oscillation with an amplitude that is amplified from zero and quickly converges to zero, and, for example, includes pseudo wavelets, such as a Gabor filter and a curvelet.

In the embodiment, in some cases, a pinwheel framelet by Hitoshi Arai and Shinobu Arai (see Section [Pinwheel Framelet] to be described later) is used as a FIR filter that can be created without involving truncation, that has a variety of frequency characteristics and a variety of orientations, and that can be expressed as a differentiable function having a compact support. However, the embodiment is not limited to this, but, for example, it is possible to use a simple pinwheel framelet (see Hitoshi Arai and Shinobu Arai, "2D tight framelets with orientation selectivity suggested by vision science", JSIAM Letters Vol. 1 (2009), pp. 9-12.), a framelet obtained by changing coefficients and/or exponents of terms constituting the definitional equation of the pinwheel framelet (such as an expression $F^1_{k,l}(\theta_1,\theta_2)$ or an expression $F^2_{k,l}(\theta_1,\theta_2)$ to be described in Section [Pinwheel Framelet]), or a framelet obtained by changing coefficients of terms constituting frequency response functions of filters of the simple pinwheel framelet (see the above-mentioned literature by Hitoshi Arai and Shinobu Arai (2009)). These framelets and the (above-mentioned narrow-sense) pinwheel framelet are hereinafter collectively called broad-sense pinwheel framelet. The "broad-sense pinwheel framelet" is a set of an approximate filter with no orientation and a plurality of detail filters with respective orientations, and is a filterbank having a degree. In other words, the broad-sense pinwheel framelet is a two-dimensional framelet with orientation selectivity. The broad-sense pinwheel framelet has the property of being a filterbank that is capable of multiresolution decomposition, has a variety of orientation selectivity, and is constituted by finite-length filters. With this broad-sense pinwheel framelet, it is possible to create an FIR digital filter that has a variety of frequency domains and a variety of orientation selectivity.

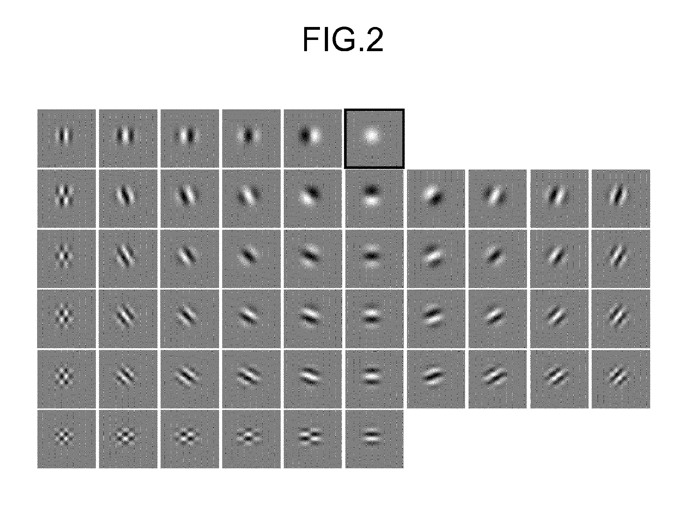

A pinwheel framelet is, for example, a mathematical model of information processing by simple cells in the human visual cortex. This decomposition is a mathematical model of signals decomposed by simple cells in the human brain. A pinwheel framelet has a degree that is an odd number of three or greater. The larger the degree, the more the orientations can be detected, which enables formation of various filters. A pinwheel framelet has a property where the number of filters increases and the calculation time increases as the degree increases. Moreover, the number of filters of a pinwheel framelet of degree n is, for example, $(n+1)^2+(n-1)^2$. Among them, one filter is an approximate filter and the remaining filters are detail filters. FIG. 2 illustrates filters obtained by calculating the cyclic correlation product of maximal overlap pinwheel framelet filters at level 3 of degree 5 and maximal overlap pinwheel framelet approximate filters at level 1 and level 2 of degree 5 (for example of the cyclic correlation product, see Hitoshi Arai, "Linear Algebra, Basics and Applications", Nippon hyoron sha Co.,Ltd. (2006)). A pinwheel framelet is a model neuroscientifically closer to simple cells in V1 of the cerebral cortex than a simple pinwheel framelet.

Because the degree of this pinwheel framelet is 5, for example, as illustrated FIG. 2, the pinwheel framelet is composed of a set of 52 filters in total, i.e., 6x6 filters on the left side and 4x4 filters on the right side, for each level. Among them, one filter surrounded by a black rectangle in the central upper portion in FIG. 2 is a filter obtained by calculating the cyclic correlation product of the approximate filters from level 1 to level 3, and the other 51 filters are filters obtained by calculating the cyclic correlation product of the detail filters at level 3 and the approximate filters from level 1 to level 2. The orientations of the filters generated by the detail filters are arranged substantially in the direction in which a pinwheel rotates around the filter generated only from the approximate filters. As will be described later, maximal overlap multiresolution decomposition by using a pinwheel framelet of each degree has levels, and level 1 detects the finest portion (high frequency portion). FIG. 2 illustrates the pinwheel framelet at level 3, and approximate portions (low frequency portions) are detected as the level increases to 2, 3, .... The filter file 106a may store a broad-sense pinwheel framelet, such as a pinwheel framelet, in the form of a function (such as a frequency response function of framelet filters). A specific example of the function will be described later.

Various wavelets may be used in the embodiment without being limited to the above. The wavelet is not limited to a classical wavelet, a wavelet in a narrow sense, or the like and includes a wavelet in a broad sense. For example, the wavelet is a finite-length waveform or a wave-like oscillation with an amplitude that amplifies from zero and quickly converges to zero, and, for example, includes pseudo wavelets, such as a Gabor filter and a curvelet. Moreover, the filter file 106a may store a filter group, such as a filterbank with orientation selectivity, and filters with orientations without being limited to a frame, such as a wavelet frame with orientation selectivity.

The filters stored in the filter file 106a are not limited to a wavelet frame with orientation selectivity itself, such as a pinwheel framelet, or a filterbank with orientation selectivity itself, but may be filters having predetermined frequency characteristics (e.g., frequency characteristics of the medium band (medium-frequency band) between the high and low frequency bands) that are created from them. For example, a filter stored in the filter file 106a may be a unit impulse response to a unit impulse signal. Such a digital filter is a unit impulse response to a unit impulse signal that is obtained, when a reconstruction is performed by summing subband signals obtained by performing multiresolution decomposition using the broad-sense pinwheel framelet on the unit impulse signal for the same number of pixels as that of the image data, by attenuating or amplifying a subband signal corresponding to at least one of filters that have predetermined frequency characteristics and/or predetermined orientations among a plurality of filters. Such a unit impulse response is used for high-speed calculation of image data of a target original image. A high-speed calculation method will be described in detail below.

As another example, the filters stored in the filter file 106a may be a digital filter for image processing that is created by calculating filter coefficients thereof by weighting frequency response functions for respective filters of a broad-sense pinwheel framelet with predetermined weights, and by multiplying and summing the results with a predetermined method. The predetermined weights may each be a weight that attenuates or amplifies a subband signal corresponding to at least, among the filters, one of filters that have predetermined frequency characteristics (e.g., medium-frequency frequency characteristics). As another example, the predetermined weights may each be a weight that increases or reduces a subband signal corresponding to a filter having a predetermined orientation among the filters. An example of filters that have predetermined frequency characteristics and an example of weighting will be described below.

The image data file 106b is an image data storage unit that stores mammographic mage data. The mammographic image data stored in the image data file 106b may be, for example, mammographic image data input via the input device 112, such as a mammographic imaging unit, or may be mammographic image data received from an external system 200 or the like via a network 300. The saving format of the image data that is stored in the image data file 106b may be medical standards such as DICOM (Digital Imaging and Communication in Medicine). The mammographic image data may be image data for a color image or may be grayscale image data. An image (data) before being subjected to multiresolution decomposition by wavelet frames with orientation selectivity, such as a pinwheel framelet, is referred to as the original image (data) and an image (data) after being reconstructed on the basis of subband signals is referred to as a reconstructed image (data). An image that is weighted with respect to predetermined frequency characteristics (e.g., medium-frequency frequency characteristics) is particularly referred to as a "processed image". The image data file 106b may store, as image data, a unit impulse signal for an image size (the number of pixels) that is the same as that of the image data of the target original image. The unit impulse signal stored in the image data file 106b is input to the filterbank stored in the filter file 106a as mammographic image data in the same manner and the output unit impulse response is used for high speed calculation of the image data of the target original image as described above (the high-speed calculation method will be described in detail below).

Here the description returns to FIG. 1 again. The input/output control interface unit 108 controls the input device 112 and the output device 114. As the output device 114, a display device, such as a monitor (including a home television), a printing device, such as a printer, and the like can be used. As the input device 112, in addition to a mammographic imaging unit, a scanner that scans an image that is recorded on a film, a connecting device for external storage media, a keyboard, a mouse, a microphone or the like can be used. The input device 112 serving as a mammographic imaging unit is, for example, a unit that images breasts by X-rays or a unit that performs positron emission tomographic imaging by PEM (Positron Emission Mammography).

In FIG. 1, the control unit 102 includes an internal memory for storing a control program, such as an OS (Operating system), a program defining various processing procedures and the like, and required data. The control unit 102 performs information processing for performing various types of processing using, for example, these programs. The control unit 102 includes a filter processing unit 102a, an image size and lightness adjusting unit 102e, a color space conversion unit 102f, and a processed image output unit 102g, from the functional concept perspective. The filter processing unit 102a further includes a decomposing unit 102b and a reconstructing unit 102c. The reconstructing unit 102c further includes a weighting unit 102d.

Among them, the filter processing unit 102a is an image processing unit that obtains subband signals by performing multiresolution decomposition using a wavelet frame with orientation selectivity or a filterbank with orientation selectivity that is a set of an approximate filter with no orientation and a plurality of detail filters with respective orientations, and reconstructs an image by summing the obtained subband signals with appropriate weights. The filter processing unit 102a may be configured as, for example, a circuit functioning as a digital filter. In the embodiment, the filter processing unit 102a includes the decomposing unit 102b and the reconstructing unit 102c as described below.

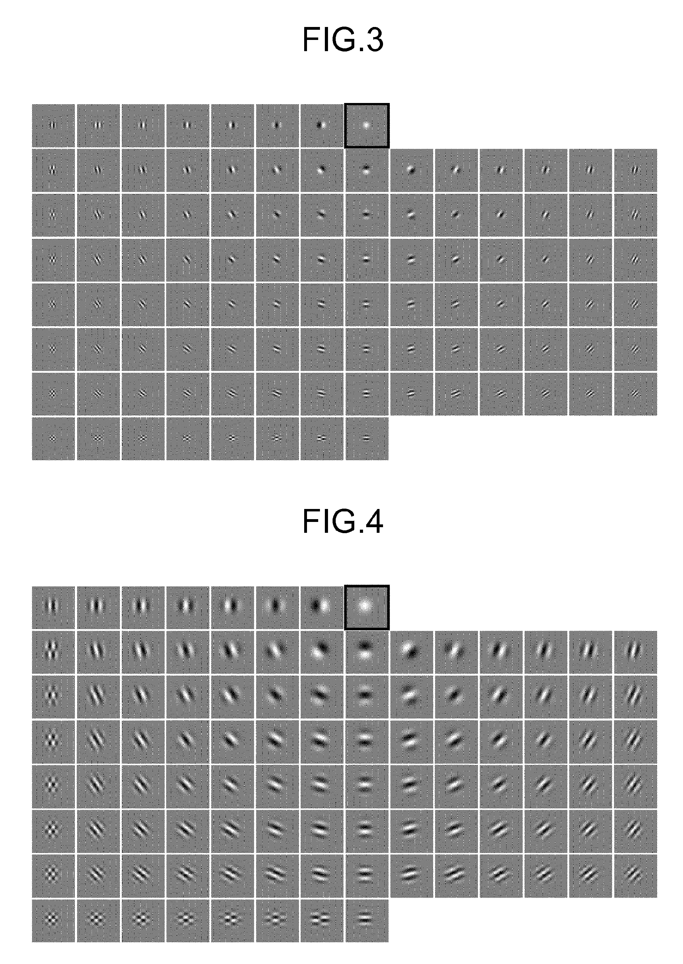

The decomposing unit 102b is a decomposing unit that obtains subband signals by performing multiresolution decomposition on image data by using wavelet frames with orientation selectivity or filterbanks with orientation selectivity stored in the filter file 106a. The "multiresolution decomposition" includes maximal overlap multiresolution decomposition, maximally decimated multiresolution decomposition, and partially decimated and partially overlap multiresolution decomposition (for example of maximal overlap multiresolution decomposition, see Hitoshi Arai, "Wavelet", Kyoritsu Shuppan Co., Ltd. (2010)). When multiresolution decomposition is calculated by the decomposing unit 102b, the cyclic correlation product and the cyclic convolution product are used; however, it may be calculated by a well-known high speed calculation method in which a fast Fourier transform is used. As described above, multiresolution decomposition by wavelet frames with orientation selectivity, such as a pinwheel framelet, has levels. FIG. 3 and FIG. 4 are diagrams for showing the difference depending on the level of a pinwheel framelet. FIG. 3 illustrates filters obtained by calculating the cyclic correlation product of maximal overlap pinwheel framelet filters at level 2 (high frequency side) and a maximal overlap pinwheel framelet approximate filter at level 1. FIG. 4 illustrates filters obtained by calculating the cyclic correlation product of maximal overlap framelet filters at level 3 (low frequency side) and maximal overlap pinwheel framelet approximate filters at level 1 and level 2. Because the degree of both of them is 7, the number of filters is $(7+1)^2+(7-1)^2=100$.

As an example, the decomposing unit 102b first detects the finest portion (high frequency portion) by maximal overlap multiresolution decomposition by using a pinwheel framelet at level 1 and detects approximate portions (low frequency portions) as the level increases to 2, 3, ....

Multiresolution decomposition by pinwheel framelets includes a decomposition phase and a synthesis phase. Each phase is composed of a filterbank composed of an array of approximate filters and detail filters. After performing the image processing in the decomposition phase and the synthesis phase, the decomposing unit 102b finally decomposes the original image data into image signals (specifically, subband signals) of the number which is "the number of filters x levels".

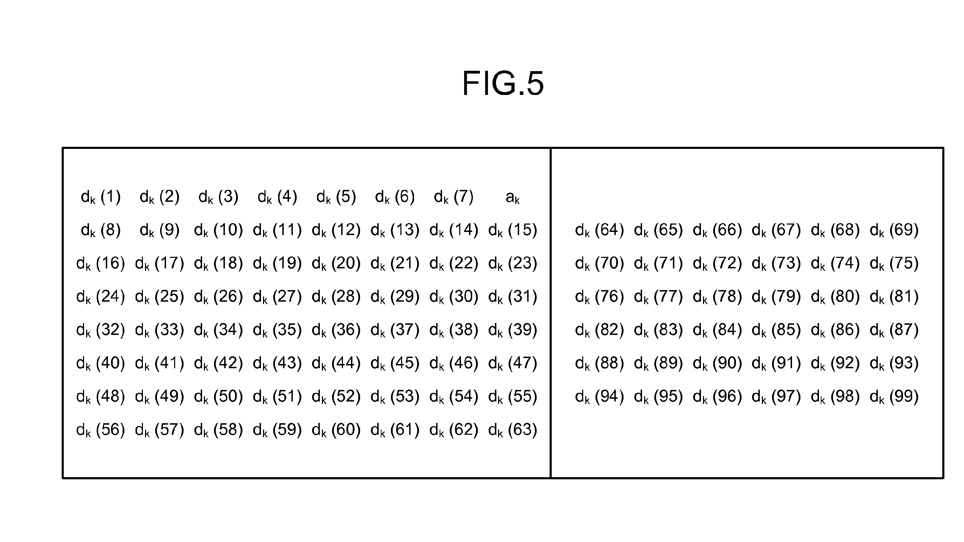

For example, in the case of maximal overlap multiresolution decomposition at level 5 by using a pinwheel framelet of degree 7, the subband signals at a certain level k (k=1 to 5) include 1 approximate part obtained using 1 approximate filter and 99 detail parts obtained using 99 detail filters. FIG. 5 is a diagram in which the approximate part is represented by $a_k$ and the detail parts are represented by symbols (numbers) of $d_k(1)$ to $d_k(99)$ in the pinwheel framelet at level k of degree 7. The position of the symbol (number) is associated with the position of each filter in FIG. 3 (k=2) or FIG. 4 (k=3). In other words, $a_k$ and $d_k(1)$ to $d_k(99)$ represent the subband signals obtained by the filters at the corresponding positions in FIG. 3 or FIG. 4. In this manner, the multiresolution decomposition using the pinwheel framelet includes the decomposition phase and the synthesis phase. Signals of the number which is "the number of filters x levels" are obtained after the synthesis phase, and these signals are referred to as the "subband signals".

The reconstructing unit 102c is a reconstructing unit that obtains reconstructed image data by reconstructing an image by summing the subband signals obtained by the decomposing unit 102b. For example, the reconstructing unit 102c obtains reconstructed image data by reconstructing an image by summing the subband signal of the approximate part obtained using the approximate filter at the maximum level described above and the subband signals of the detail parts obtained using all the detail filters. At this point, if the pinwheel framelet has a perfect reconstruction property and the weighting unit 102d to be described below does not perform any processing, the reconstructing unit 102c reproduces an image that is the same as the original image. In other words, after specified particular subband signals are attenuated (deleted) or amplified (enhanced) by processing by the weighting unit 102d, the reconstructing unit 102c sums the subband signals to obtain the reconstructed image data different from the original image, i.e., the processed image data.

The relation between the perfect reconstruction property and the weighting processing (image processing) will be described using the symbols (numbers) described above. The perfect reconstruction property of maximal overlap multiresolution decomposition is expressed by the following expression.

$$x = a_5 + (d_5(1) + \ldots + d_5(99)) + \ldots + (d_1(1) + \ldots + d_1(99))$$

where x is the input signal (original signal) of the original image.

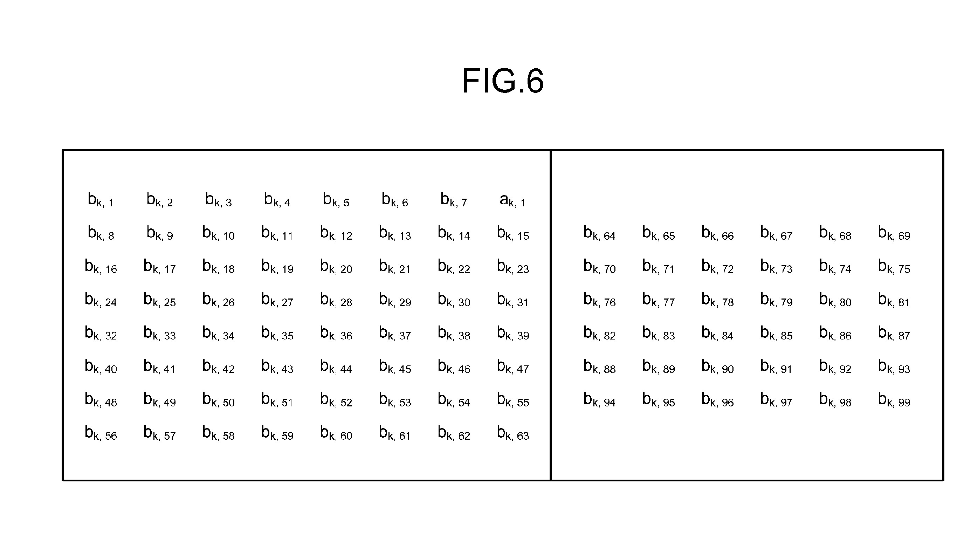

Coefficients of appropriate real numbers are applied to the approximate part and the detail parts and they are denoted as follows: $a_{5,1}$, $b_{5,1}$, ..., $b_{5,99}$, ... , $b_{1,1}$, ..., $b_{1,99}$. FIG. 6 is a diagram representing the coefficients applied in association with the array of filters in FIG. 5. In this case, the reconstructed image (signal) is expressed by the following expression.

$$y = a_{5,1}a_5 + (b_{5,1}d_5(1) + \ldots + b_{5,99}d_5(99)) + \ldots + (b_{1,1}d_1(1) + \ldots + b_{1,99}d_1(99))$$

At this point, in the case of $a_{5,1}=b_{5,1}=...=b_{5,99}=...=b_{1,1}=...=b_{1,99}=1$, it is clear that x=y (the original image and the reconstructed image are the same), which indicates a perfect reconstruction. In the embodiment, as an example, the weighting unit 102d may generate the reconstructed image (that is, the processed image) that is not the same as the original image by setting the coefficients $a_{5,1}$, $b_{5,1}$, ... , $b_{5,99}$, ..., $b_{1,1}$, ..., $b_{1,99}$ of the subband signals corresponding to the filters that have predetermined frequency characteristics (for example, the high and low frequency characteristics) to values that are not 1. As another example, the weighting unit 102d may generate the reconstructed image (that is, the processed image) that is not the same as the original image by setting the coefficients $a_{5,1}$, $b_{5,1}$, ... , $b_{5,99}$, ... , $b_{1,1}$, ..., $b_{1,99}$ of the subband signals corresponding to the filters that have predetermined orientations to values that are not 1.

Classification of the detail filters will be described. The detail filters can be characterized by frequency characteristics thereof. Specifically, the detail filters spreading from the approximate part concentrically with the approximate filter of the pinwheel framelet at the center have a characteristic that allows higher-frequency components to pass at a larger distance from the center and allows lower-frequency components to pass at a smaller distance from the center. In other words, the detail filters on the side farther from the approximate filter in the filter arrangement of the pinwheel framelet obtain the subband signals of the higher-frequency components, and the detail filters on the side nearer to the approximate filter in the filter arrangement of the pinwheel framelet obtain the subband signals of the lower-frequency components.

In the example of FIG. 5, the subband signals corresponding to the detail filters having the lowest-frequency-side frequency characteristics are $d_k(7)$, $d_k(14)$, $d_k(15)$, and $d_k(64)$. The subband signals corresponding to the detail filters having the next lowest-frequency-side frequency characteristics are $d_k(6)$, $d_k(13)$, $d_k(21)$ to $d_k(23)$, $d_k(65)$, $d_k(70)$, and $d_k(71)$. The subband signals corresponding to the detail filters having the still next lowest-frequency-side frequency characteristics are $d_k(5)$, $d_k(12)$, $d_k(20)$, $d_k(28)$ to $d_k(31)$, $d_k(66)$, $d_k(72)$, and $d_k(76)$ to $d_k(78)$. The subband signals corresponding to the detail filters having the still next lowest-frequency-side (relatively medium-frequency-side) frequency characteristics are $d_k(4)$, $d_k(11)$, $d_k(19)$, $d_k(27)$, $d_k(35)$ to $d_k(39)$, $d_k(67)$, $d_k(73)$, $d_k(79)$, and $d_k(82)$ to $d_k(85)$. The subband signals corresponding to the detail filters having the still next lowest-frequency-side (relatively high-frequency-side) frequency characteristics are $d_k(3)$, $d_k(10)$, $d_k(18)$, $d_k(26)$, $d_k(34)$, $d_k(42)$ to $d_k(47)$, $d_k(68)$, $d_k(74)$, $d_k(80)$, $d_k(86)$, and $d_k(88)$ to $d_k(92)$. The subband signals corresponding to the detail filters having the still next lowest-frequency-side (relatively high-frequency-side) frequency characteristics are $d_k(2)$, $d_k(9)$, $d_k(17)$, $d_k(25)$, $d_k(33)$, $d_k(41)$, $d_k(49)$ to $d_k(55)$, $d_k(69)$, $d_k(75)$, $d_k(81)$, $d_k(87)$, $d_k(93)$, and $d_k(94)$ to $d_k(99)$. The subband signals corresponding to the detail filters having the still next lowest-frequency-side (highest-frequency-side) frequency characteristics are $d_k(1)$, $d_k(8)$, $d_k(16)$, $d_k(24)$, $d_k(32)$, $d_k(40)$, $d_k(48)$, and $d_k(56)$ to $d_k(63)$.

Detail filters can also be characterized by frequency characteristics thereof. Classification of the detail filters with respect to orientations will be described. The detail filters can be classified into five types on the basis of their orientation. Specifically, if the axis orthogonal to a certain direction is referred to as the "orthogonal axis", the detail filters can be classified into five types, i.e., (1) a detail filter with an orientation in the same direction as the orthogonal axis, (2) a detail filter with an orientation in the direction vertical to the orthogonal axis, (3) a detail filter with an orientation that is at a positive angle relative to the orthogonal axis, (4) a detail filter with an orientation that is at a negative angle relative to the orthogonal axis, and (5) a detail filter whose orientation is not uniquely defined. The angle $\theta$ relative to the orthogonal axis of the direction is represented by $-90° < \theta \leq +90°$, where the counterclockwise direction is defined as the positive direction. The detail filter with an orientation horizontal or vertical to the orthogonal axis ($\theta=0°$, $90°$) is classified as (1) or (2) and therefore is not classified as (3) or (4). Moreover, the "(5) detail filter whose orientation is not uniquely defined" includes orientations at both a positive angle and a negative angle, the absolute values of which relative to the orthogonal axis are the same; therefore, this detail filter is not classified as (3) or (4).

Assuming that a certain direction is the longitudinal direction, for example, in the example in FIG. 5, the subband signals corresponding to the "(1) detail filter with an orientation in the same direction as the orthogonal axis" are $d_k(15)$, $d_k(23)$, $d_k(31)$, $d_k(39)$, $d_k(47)$, $d_k(55)$, and $d_k(63)$. The subband signals corresponding to the "(2) detail filter with an orientation in the direction vertical to the orthogonal axis" are $d_k(1)$ to $d_k(7)$. The subband signals corresponding to the "(3) detail filter with an orientation that is at a positive angle relative to the orthogonal axis" are $d_k(64)$ to $d_k(99)$. The subband signals corresponding to the "(4) detail filter with an orientation that is at a negative angle relative to the orthogonal axis" are $d_k(9)$ to $d_k(14)$, $d_k(17)$ to $d_k(22)$, $d_k(25)$ to $d_k(30)$, $d_k(33)$ to $d_k(38)$, $d_k(41)$ to $d_k(46)$, and $d_k(49)$ to $d_k(54)$. The subband signals corresponding to the "(5) detail filter whose orientation is not uniquely defined" are $d_k(8)$, $d_k(16)$, $d_k(24)$, $d_k(32)$, $d_k(40)$, $d_k(48)$, and $d_k(56)$ to $d_k(62)$. The use of such orientations of detail filters can increase or reduce components with specified particular directionality in the processed image.

The above is the explanation of the classification of the detail filters.

The weighting unit 102d is a weighting unit that attenuates or amplifies the subband signals corresponding to the filters having the predetermined frequency characteristics (specified particular frequency characteristics) and/or the predetermined orientations (specified particular orientations). The weighting unit 102d may perform weighting by applying weighting factors to the subband signals obtained by the decomposing unit 102b and summing the subband signals or may weight the frequency response functions of the framelet filters stored in functional forms, and thereafter, may derive respective filter coefficients, or may apply multiplication and addition to the weighted frequency response functions using a predetermined method to obtain the filter coefficients and store the filter coefficients in the filter file 106a so as to be able to quickly obtain the reconstructed image data. The weighting unit 102d may also weight the filters in the decomposition phase and/or the synthesis phase. Under the weighting processing by the weighting unit 102d, the filter processing unit 102a may obtain in advance a unit impulse response to a unit impulse signal for the same number of pixels as that of the image data and store the unit impulse response in the filter file 106a so as to quickly obtain the reconstructed image data using the unit impulse response. In other words, the filter processing unit 102a can quickly obtain processed image data by obtaining a cyclic convolution product using a unit impulse response for new image data.

In the embodiment, as an example, the weighting unit 102d may perform weighting so as to obtain predetermined frequency components by specifying the predetermined frequency characteristics according to a position in a predetermined filter arrangement based on an orientation at each level of the broad-sense pinwheel framelet and/or according to a level in the multiresolution decomposition. For example, the weighting unit 102d may perform the image processing so as to remove low frequency components, such as a difference in the density or a general change in a mammographic image, by performing weighting that relatively attenuates subband signals corresponding to approximate filters at a predetermined level in the multiresolution decomposition. For this processing, assuming that the decomposing unit 102b performs the multiresolution decomposition up to the predetermined level, the weighting unit 102d may perform weighting that relatively attenuates subband signals in the approximate part obtained by an approximate filter at the maximum level (for example, set the coefficient $a_{k,1}$ of the approximate part to zero). Not limited to this, in the case in which the decomposing unit 102b performs the multiresolution decomposition up to a level higher than the predetermined level, the weighting unit 102d may perform weighting that relatively attenuates detail parts at levels higher than the predetermined level and the approximate part at the maximum level.

The weighting unit 102d may perform the image processing so as to relatively amplify the medium-frequency components between high and low frequencies by performing weighting that relatively attenuates subband signals corresponding to detail filters on the side farther from the approximate filter in the filter arrangement, among a plurality of filters, and by relatively attenuating subband signals corresponding to the approximate filter (and, if required, detail filters on the side nearer to the approximate filter) in the filter arrangement. More specifically, coefficients may be set to values close to zero for the subband signals corresponding to the approximate filter of the above-described pinwheel framelet (and, if required, for the subband signals corresponding to the detail filters that are positioned nearer to the approximate filter and have low-frequency-side frequency characteristics), coefficients may be set to values close to zero for the subband signals corresponding to the detail filters that are positioned farther from the approximate filter and have high-frequency-side frequency characteristics, and subband signals corresponding to the detail filters on the medium frequency side that are positioned midway from the approximate filter may be set to values close to one.

The weighting unit 102d may perform the image processing so as to obtain medium-frequency components more than high-frequency components and low-frequency components by performing weighting that relatively attenuates subband signals corresponding to filters having high-frequency frequency characteristics and filters having low-frequency frequency characteristics, among a plurality of filters, and relatively amplifies subband signals corresponding to filters having medium-frequency frequency characteristics, such as relatively high-frequency and relatively low-frequency frequency characteristics, among a plurality of filters. More specifically, coefficients may be set to values close to zero for the subband signals corresponding to the filters of the above-described pinwheel framelet that have the high-frequency frequency characteristics and the filters of the above-described pinwheel framelet that have the low-frequency frequency characteristics, and coefficients may be set to values close to one for the subband signals corresponding to the detail filters that have the medium-frequency frequency characteristics.

The weighting unit 102d may perform weighting with respect to orientation. For example, the weighting unit may perform the image processing that, by relatively attenuating subband signals corresponding to detail filters having predetermined orientations corresponding to a normal radial structure, relatively amplifies subband signals, other than the subband signals, corresponding to the detail filters having orientations corresponding to abnormal distortion. For example, by setting the coefficients to values close to zero for the subband signals corresponding to the detail filter of the pinwheel framelet that have orientations at a predetermined angle (for example, angle at the position among the radial shape) $\theta$ (-90°<$\theta\leq$+90°) and setting the other coefficients to values close to one, components having abnormal orientations other than the orientations at the predetermined angle $\theta$ may be extracted from the mammographic image data. For this processing, the weighting unit 102d may divide the original image data into a plurality of radial image areas, then perform image processing that amplifies or attenuates the corresponding subband signals on each of the image areas, and combine the divided sets of processed image data that are processed independently.

The above description is of an example of a pattern of subband signals that are attenuated or amplified by the weighting unit 102d.

Here the description returns to FIG. 1 again. The image size and lightness adjusting unit 102e is an image size and lightness adjusting unit that adjusts the image size and lightness. For example, the image size and lightness adjusting unit 102e may perform processing for lightness scaling, symmetric extension of an image, changing the image size, etc. The image size and lightness adjusting unit 102e may use, for example, a known method for the method of processing for scaling of lightness, symmetric extension of an image, changing the image size, etc. For example, the image size and lightness adjusting unit 102e may cause the output device 114 to display a GUI tool, such as a slider, to perform control to allow specialists, such as a doctor for radiographic interpretation, to adjust lightness scaling etc., via the input device 112.

The color space conversion unit 102f is a color space conversion unit that performs conversion of the color space, decomposition and synthesis of the color components, and the like. For example, when the mammographic image data is grayscale data, the color space conversion unit 102f may color the image processed by the filter processing unit 102a in, for example, red, and then superimpose the processed image onto the original image. When the mammographic image data stored in the image data file 106b is color image data, the color space conversion unit 102f may convert the image data into color components in a color space, such as a CIELAB color space, before the decomposing unit 102b performs the processing.

The processed image output unit 102g outputs reconstructed image data (that is, processed image data) reconstructed by the reconstructing unit 102c to the output device 114 while the weighting unit 102d is attenuating or amplifying subband signals after, if necessary, the color space conversion unit 102f and the image size and lightness adjusting unit 102e perform processing. The processed image output unit 102g may output the mammographic image data and the processed image data to the output device 114 such that the user can compare the mammographic original image and the processed image.

The processed image that is the reconstructed image according to the embodiment is characterized in that predetermined components of frequency components and/or orientation components constituting the original image and that are extracted using filters having respective orientations are attenuated or amplified. For example, the medium band components of the processed image between the high and low frequency bands are relatively amplified compared to the original image. In other words, the high frequency components and low frequency components of the processed images are relatively attenuated compared to the original image. It can be described that, in the example where subband signals are increased or reduced by multiresolution decomposition, subband signals of the processed image data that correspond to at least one of the detail filters having the medium-frequency-side frequency characteristics are relatively amplified.

Accordingly, the low frequency components of the mammographic image data that correspond to a difference in gradation or a general change are cut, and the high frequency noise and the high frequency components of the mammographic image data that hinder detection of distortion are cut, so that the processed image according to the embodiment is an image on which the mammary gland tissue is easily viewed and distortion is easily found compared to the original image.

The processed image output unit 102g may output the processed image for display to a display device, such as a monitor, or may output the processed image for printing to a printing device, such as a printer, to produce a printing medium. The medium on which the processed image is printed may be, for example, paper, a transparency, or the like. The processed image output unit 102g may transmit the processed image data to the external system 200 via the network 300. The processed image output unit 102g may store the processed image data in an external storage device (such as an USB memory or an SD card). The user may connect the external storage device to another device, such as a tablet terminal, to cause the output device of the device to display the processed image.

The image processing apparatus 100 may be communicatively connected to the network 300 via a communication device, such as a router, and a wired or wireless communication line, such as a dedicated line. In FIG. 1, the communication control interface unit 104 performs communication control between the image processing apparatus 100 and the network 300 (or a communication device, such as a router). In other words, the communication control interface unit 104 is an interface connected to a communication device (not shown), such as a router, connected to a communication line or the like, and has a function of performing data communication with other terminals via communication lines. In FIG. 1, the network 300 has a function of mutually connecting the image processing apparatus 100 and the external system 200 and is, for example, the Internet or the like.

In FIG. 1, the external system 200 is mutually connected to the image processing apparatus 100 via the network 300 and may have the function of providing a program for causing an external database relating to mammographic image data or a broad-sense pinwheel framelet or a computer to function as the image processing apparatus. The external system 200 may be configured as a tablet terminal or the like to receive processed image data from the image processing apparatus 100 via the network 300 and cause the output device of the external system 200 to display the processed image. The external system 200 may be configured as a WEB server, an ASP server, or the like. Moreover, the hardware configuration of the external system 200 may be composed of an information processing apparatus, such as a commercially available workstation and a personal computer, and accessory devices thereof. The functions of the external system 200 are realized by a CPU, a disk device, a memory device, an input device, an output device, a communication control device, and the like in the hardware configuration of the external system 200, programs for controlling these devices, and the like.

This is the end of the explanation of the configuration of the image processing apparatus 100 according to the embodiment. In the above explanation, the image processing apparatus 100 is explained mainly regarding the function of generating processed image data for mammographic original images serving as original images; however, the image processing apparatus 100 is not limited to this, but may be, for example, a computer that realizes the function of creating the filters according to the present invention. For example, the image processing apparatus 100 may perform the same processing as the processing of generating the processed image by applying image processing to the original image data on the unit impulse signal for the same number of pixels as that of the image data and may create a unit impulse response to the obtained unit impulse signal as the filters. In a similar manner, if a broad-sense pinwheel framelet is defined in a functional form, the image processing apparatus 100 may create a digital filter for image processing by calculating filter coefficients thereof by weighting the frequency response functions for the respective filters of the broad-sense pinwheel framelet with the same predetermined weights as those for the processing on the original images, and applying multiplication and addition to the weighted frequency response functions with a predetermined method. The image processing apparatus 100 may store the digital filter thus created into the filter file 106a, and may apply image processing to the original image data using the created digital filter.

[Processing by Image Processing Apparatus 100]

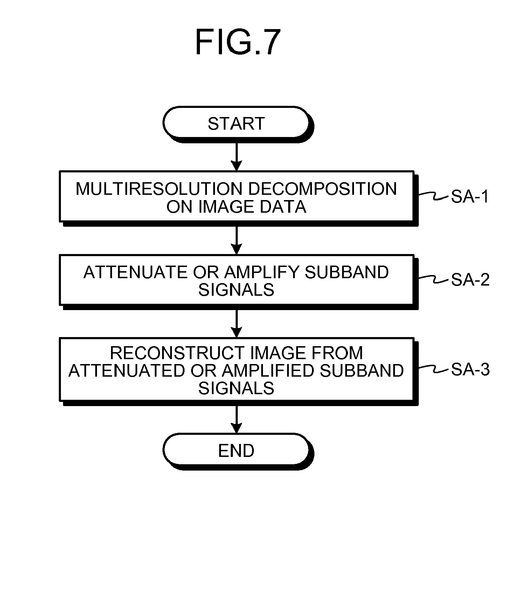

The following describes in detail an example of the processing by the image processing apparatus 100 according to the embodiment configured as described above, with reference to FIGS. 7 to 30.

[Basic Processing]

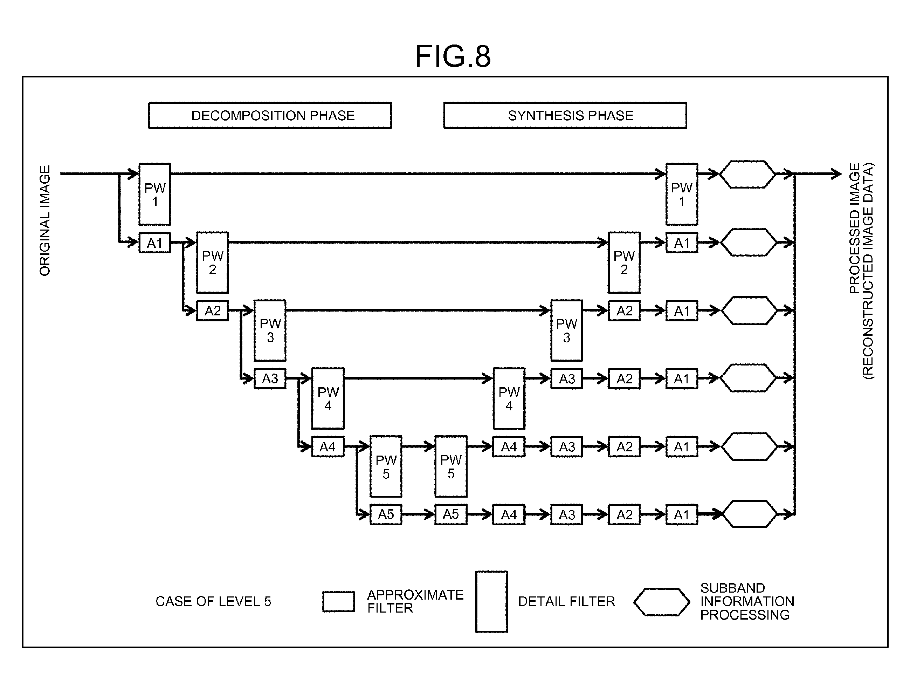

An example of the processing by the image processing apparatus 100 will be described with reference to FIGS. 7 and 8. FIG. 7 is a flowchart illustrating an example of the processing by the image processing apparatus 100 according to the embodiment. For the following processing, an example will be described where image processing that enhances distortion due to breast cancer by increasing or reducing subband signals obtained by multiresolution decomposition using a pinwheel framelet is performed; however, the image processing is not limited to this and, as long as it is image processing that relatively amplifies the medium band components between the high and low frequency bands, a variety of filters and image processing methods may be used to generate processed image data in which distortion due to breast cancer is enhanced.

First, the decomposing unit 102b of the filter processing unit 102a obtains subband signals by performing maximal overlap multiresolution decomposition by using the pinwheel framelets stored in the filter file 106a on the mammographic image data stored in the image data file 106b (Step SA-1). FIG. 8 is a diagram illustrating an example of the filterbanks in the decomposition phase and the synthesis phase of the maximal overlap multiresolution decomposition. The numbers in FIG. 8 indicate levels. "PW" indicates a detail filter. In the case of degree 7, there are 99 detail filters for each level. "A" indicates an approximate filter. In the case of degree 7, there is one approximate filter for each level.

As illustrated in FIG. 8, first, using the pinwheel framelet at level 1, the decomposing unit 102b decomposes the mammographic original image as an input signal into signals that pass 99 detail filters and a signal that passes one approximate filter. Next, using the pinwheel framelet at level 2, the decomposing unit 102b decomposes the signal that has passed the approximate filter at level 1 into signals that pass 99 detail filters (at level 2) and a signal that passes one approximate filter (at level 2). The decomposing unit 102b repeats this processing until the level reaches a maximum level (in the case of FIG. 8, level 5). Then, the decomposing unit 412b puts the signals obtained in the decomposition phase through the filterbank in the synthesis phase, and eventually obtains 99×5 subband signals (detail parts) and one subband signal (approximate part).

The description returns to FIG. 7 again. The reconstructing unit 102c does not perfectly reconstruct the image by simply summing the subband signals obtained by the decomposing unit 102b in the above manner, but performs the weighting by attenuating or amplifying subband signals from specified particular detail filters through the processing by the weighting unit 102d (Step SA-2).

Regarding the weighting, in the embodiment, the weighting unit 102d performs processing on the subband information by multiplying the subband signals output from the decomposing unit 102b by coefficients, as illustrated in FIG. 8 (for a specific example of the filter pattern that attenuates or amplifies the subband signals (i.e., specific example of weighting), refer to the above and following descriptions).

Then, the reconstructing unit 102c reconstructs the image by summing the subband signals processed by the weighting unit 102d as described above (Step SA-3).

Then, the processing performed by the image processing apparatus 100 ends.

[Specific Processing]

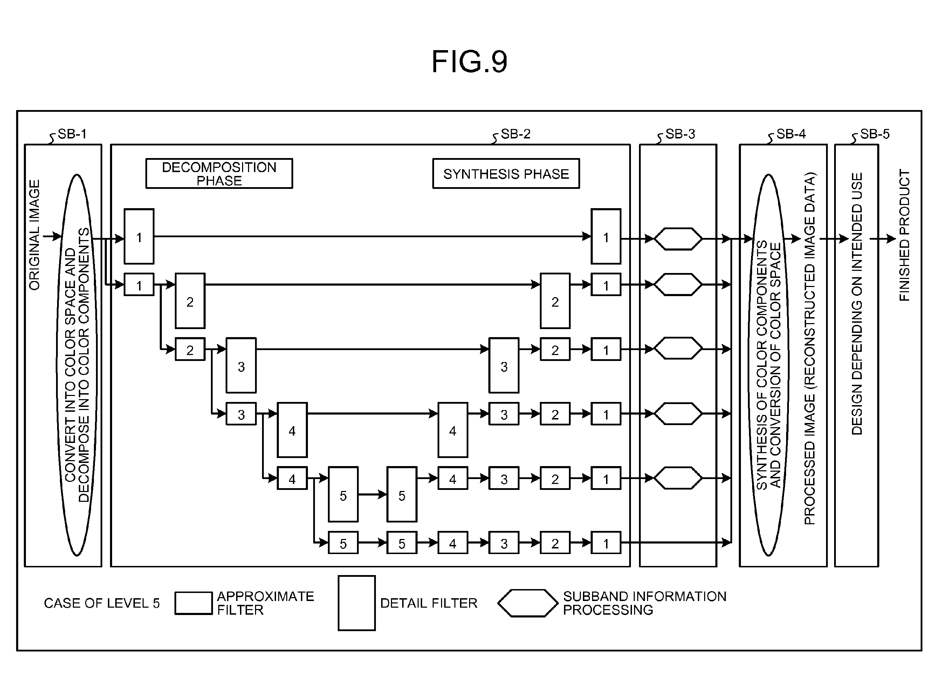

Next, details of the processing that is more specific than the basic processing performed by the image processing apparatus 100 will be described with reference to FIGS. 9 to 30. FIG. 9 is a flowchart illustrating one example of the specific processing performed by the image processing apparatus 100 according to the embodiment. For this specific processing, an explanation will be provided for color space conversion processing and decomposition and synthesis processing of color components, processing on the design of reconstructed image data depending on the intended use, printing processing for obtaining finished products, and the like, if necessary, in addition to the specific examples of the processing described above.

(Step SB-1)

First, a user (such as a radiologic technologist in a healthcare facility) obtains mammographic image data as an original image via the input device 112, such as a mammographic imaging unit, or the like, and stores the mammographic image data in the image data file 106b. In the case where the stored mammographic image data is a color image, the image processing apparatus 100 converts the color space to the CIELAB color space through the processing performed by the color space conversion unit 102f. As a result, the image is decomposed into three color components, that is, L* (lightness), a* (red-green), and b* (yellow-blue). When the image data is grayscale, the color space conversion unit 102f does not perform processing related to the color space.

(Step SB-2)

Then, the decomposing unit 102b performs maximal overlap multiresolution decomposition by using pinwheel framelets on a predetermined color component (for example, lightness component and, in the case of grayscale, tone value) of the mammographic original image that is an input signal. Here, an explanation is given using pinwheel framelets of degree 7. However, similar image processing can also be performed by using wavelet frames of other degrees or with different orientation selectivity. As another example, a simple pinwheel framelet may be used (see Hitoshi Arai and Shinobu Arai, "2D tight framelets with orientation selectivity suggested by vision science", JSIAM Letters Vol. 1 (2009), pp. 9-12.). Alternatively, a pinwheel wavelet frame can also be used (see Hitoshi Arai and Shinobu Arai, "Finite discrete, shift-invariant, directional filterbanks for visual information processing, I: Construction", Interdisciplinary Information Sciences, Vol. 13, (2007), pp. 255-273.). Moreover, multiresolution decomposition, such as maximally decimated multiresolution decomposition or partially decimated and partially overlap multiresolution decomposition, may be performed without being limited to the maximal overlap multiresolution decomposition.

(Step SB-3)

Then, the reconstructing unit 102c does not sum all the subband signals obtained by performing the maximal overlap multiresolution decomposition by using the decomposing unit 102b, but performs weighting processing of deleting or attenuating certain subband signals, adding certain subband signals without modifying them, and adding certain subband signals after amplifying them by using the weighting unit 102d. A processed image is obtained by arranging the images each obtained by processing the original image by this processing method. Examples of the processing method will be described below. In the following examples, the weighting unit 102d increases or reduces subband signals by setting the coefficients $b_{k,n}$ illustrated in FIG. 6. An operation may be performed on the coefficient $a_{k,1}$ of the approximate

part ($0 \leq a_{k,1} \leq 1$).

As an example, the weighting unit 102d may perform weighting so as to obtain predetermined frequency components by specifying the predetermined frequency characteristics according to a position in a predetermined filter arrangement based on an orientation at each level of the pinwheel framelet and/or according to a level in the multiresolution decomposition. For example, the weighting unit 102d may perform the image processing so as to remove low frequency components, such as a difference in gradation or a general change in the mammographic image. For this processing, assuming that the decomposing unit 102b performs the multiresolution decomposition up to the predetermined level, the weighting unit 102d may perform weighting that relatively attenuates subband signals in the approximate part obtained by an approximate filter at the maximum level (for example, set the coefficient $a_{k,1}$ of the approximate part at a predetermined level that is the maximum level to zero). Not limited to this, in the case in which the decomposing unit 102b performs the multiresolution decomposition up to a level higher than the predetermined level, the weighting unit 102d may perform weighting that relatively attenuates detail parts at levels higher than the predetermined level and the approximate part at the maximum level.

The weighting unit 102d may perform the image processing so as to relatively amplify the medium frequency components between high and low frequencies by performing weighting that relatively attenuates subband signals corresponding to detail filters on the side farther from the approximate filter in the filter arrangement, among a plurality of filters, and relatively attenuates subband signals corresponding to the approximate filter (and, if necessary, also detail filters on the side very nearer to the approximate filter) in the filter arrangement, among a plurality of filters. More specifically, coefficients may be set to values close to zero for the subband signals corresponding to the approximate filter of the above-described pinwheel framelet (and, if necessary, also for the subband signals corresponding to the detail filters that are positioned very nearer to the approximate filter and have low-frequency-side frequency characteristics), coefficients may be set to values close to zero for the subband signals corresponding to the detail filters that are positioned farther from the approximate filter and have high-frequency-side frequency characteristics, and subband signals corresponding to the detail filters on the medium frequency side that are positioned midway from the approximate filter may be set to values close to one. In other words, the weighting unit 102d may perform the image processing so as to obtain medium-frequency components more than high-frequency components and low-frequency components by performing weighting that relatively attenuates subband signals corresponding to filters having high-frequency frequency characteristics and filters having low-frequency frequency characteristics and relatively amplifies subband signals corresponding to filters having medium-frequency frequency characteristics, such as relatively high-frequency and relatively low-frequency frequency characteristics, among a plurality of filters. More specifically, coefficients may be set to values close to zero for the subband signals corresponding to the filters of the above-described pinwheel framelet that have the high-frequency frequency characteristics and the filters that have the low-frequency frequency characteristics, and coefficients may be set to values close to one for the subband signals corresponding to the detail filters that have the medium-frequency frequency characteristics.

The weighting unit 102d may perform weighting with respect to orientation. For example, the weighting unit may perform the image processing that, by relatively attenuating subband signals corresponding to detail filters having predetermined orientations corresponding to a normal radial structure, relatively amplifies subband signals, other than the subband signals, corresponding to the detail filters having orientations corresponding to abnormal distortion. For example, by setting the coefficients to values close to zero for the subband signals corresponding to the detail filter of the pinwheel framelet that have orientations at a predetermined angle (for example, angle at the position among the radial shape) $\theta$ ($-90° < \theta \leq +90°$) and setting the other coefficients to values close to one, components having abnormal orientations other than the orientations at the predetermined angle $\theta$ may be extracted from the mammographic image data. For this processing, the weighting unit 102d may divide the original image data into a plurality of radial image areas, then perform image processing that amplifies or attenuates the corresponding subband signals on each of the image areas, and combine the divided sets of processed image data that are processed independently.

This is the end of the explanation of the example of weighting performed by the weighting unit 102d.

(Step SB-4)

If necessary, the color space conversion unit 102f may synthesizes the image signals of the processed color components (such as L*, a*, and b*) to restore the image to a color image before the processed image output unit 102g outputs to display or prints out the image. Even in the case where the mammographic original image is not a color image, the color space conversion unit 102f may perform processing so as to make it possible to easily view by color the mammary gland structure on the original image by coloring the image processing result by the processed image output unit 102g in, for example, red and then superimposing the image processing result onto the original image data. At Step SB-4, if the value of the lightness after the processing exceeds the range of 0 to 255, processing may be performed in which a threshold is used so as to set a value equal to or smaller than 0 to 0 and replace a value equal to or larger than 255 with 255, or the lightness and color scales may be appropriately converted.

(Step SB-5)

The image processing apparatus 100 may add designs depending on the intended use. For example, in the case where, after the original image data is divided into a plurality of radial image areas through the processing by the weighting unit 102d, the reconstructing unit 102c performs processing to increase or reduce subband signals corresponding to filters having orientations corresponding to the respective image areas, the reconstructing unit 102c may perform processing of combining the divided sets of processed image data that are processed independently.

This is the end of the explanation of the specific processing performed by the image processing apparatus 100.

[Example of High-Speed Calculation Method]

In the example of the specific processing described above with reference to FIG. 9, a large number of filtering calculations need to be performed to calculate the processing at Steps SB-2 and SB-3 every time an image is input; thus, a relatively long time is required. In this example, an example of a high-speed calculation method that shortens the filtering calculation time will be explained.

First, the filter processing unit 102a (including, for example, the decomposing unit 102b and the reconstructing unit 102c) inputs, instead of the image signal, a unit impulse signal for an image size (the number of pixels) that is the same as that of the image signal, to a filterbank to be used (for example, the above-described filterbank in FIG. 8), and stores in advance an output signal F in the storage unit 106, including, for example, the filter file 106a. The unit impulse signal is, for example, a signal in which the value of the upper left end is 1 and other values are all 0 in the image signal.

Then, when the processed image data is generated, the filter processing unit 102a calculates a cyclic convolution product x*F (also referred to as the circular convolution product) of an image x on which the processing at Step SB-1 explained with reference to FIG. 9 has been performed and F (for example of the cyclic convolution product, see Hitoshi Arai, "Fourier Analysis", Asakura Publishing Co., Ltd. (2003)). The calculated product x*F is the same as the reconstructed image y calculated by the specific processing described above with reference to FIG. 9.

Examples

An example in which filter designing was performed in order to perform image processing that enhances distortion and the result of the image processing will be explained below.

In the example, by applying a "pinwheel framelet" that was constructed as a human visual mathematical model to filtering, image processing for which an evaluation algorithm by human visual image evaluation was taken into consideration was performed.

[Filter Designing Example]

In the example, filters (hereinafter, "DiWI filters" (distortion-weighted image filters)) were designed in order to perform image processing on 3328×2560 (height × width) mammographic image (grayscale). There are other sizes for mammographic images and, if the image size varies, the frequency characteristics of the image vary accordingly. For this reason, if the image size varies and accordingly the frequency characteristics of the image vary, filters suitable for the image are designed according to the frequency of the image. In that case, it is possible to design suitable DiWI filters similarly by changing the degree of the framelet to be used or changing filters to be selected from among a plurality of filters. The image size may be changed to 3328×2560 (height × width) by using a known method.

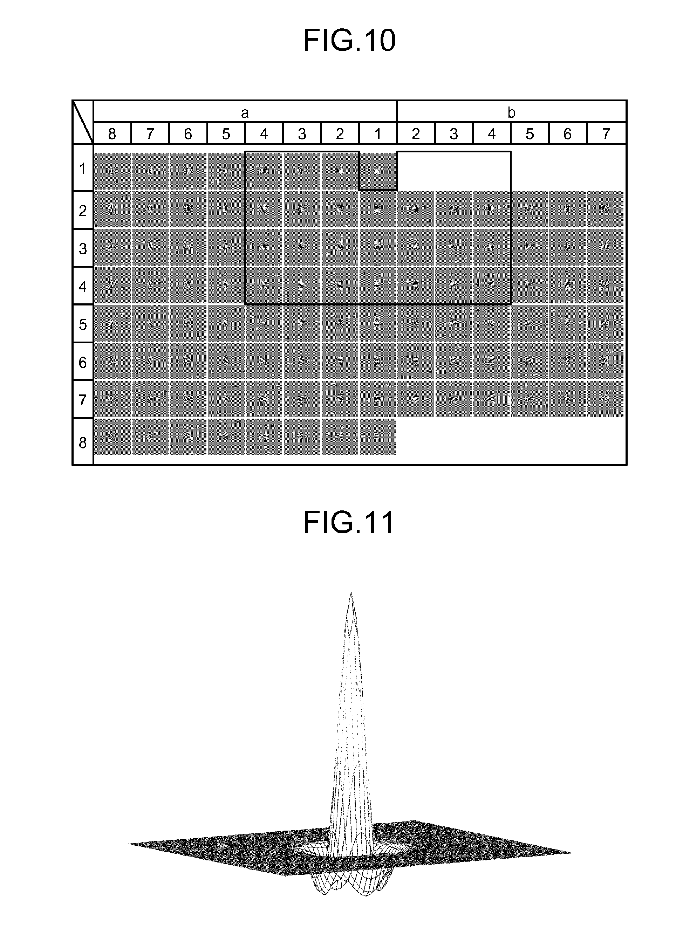

In the example, pinwheel framelet filters of degree 7 were used as a filter group from which the DiWI filters were constructed. The filter group may have another degree and may be a simple pinwheel framelet or another wavelet frame, without being limited to the pinwheel framelet. FIG. 10 illustrates filters that are obtained by calculating the cyclic correlation product of maximal overlap pinwheel framelet filters at level 2 of degree 7 and maximal overlap pinwheel framelet approximate filters at level 1 of degree 7.

In the example, subband-signals corresponding to 24 filters surrounded by the line forming a concave shape were used. In other words, as illustrated in FIG. 10, in the filter arrangement of the pinwheel framelet, weighting was performed so as to extract the band components between the high and low frequency bands by setting coefficients to one for the subband signals corresponding to the detail filters that are positioned nearer to the approximate filter and have low-frequency-side frequency characteristics, by setting coefficients to zero for the subband signals corresponding to the detail filters that are positioned farther from the approximate filter and have high-frequency-side frequency characteristics, and by setting a coefficient to zero for the subband signal corresponding to the approximate filter.

By decomposing a mammographic image by using the maximum overlap framelet and summing the subband signals corresponding to the above-described 24 filters, a processed image (hereinafter, a "DiWI" (distortion-weighted image)) can be obtained; however, because it takes a very long time, one filter (hereinafter, a "DiWI-PW7 filter") was used according to the following method (the same as the above-described [Example of High-Speed Calculation Method]). Note that the image size was fixed in advance.

First, a 3376×2068 (height × width) image in which only the upper left is 1 and all the rest is 0 (unit impulse signal) was created. In order to extend and process the mammographic image (3328×2560 (height × width), the image size of the unit impulse signal was set larger than that of the mammographic image. The unit impulse response obtained by decomposing the image (unit impulse signal) with a maximum overlap framelet of degree 7 and by summing the subband signals corresponding to the 24 filters was set as the "DiWI-PW7 filter".

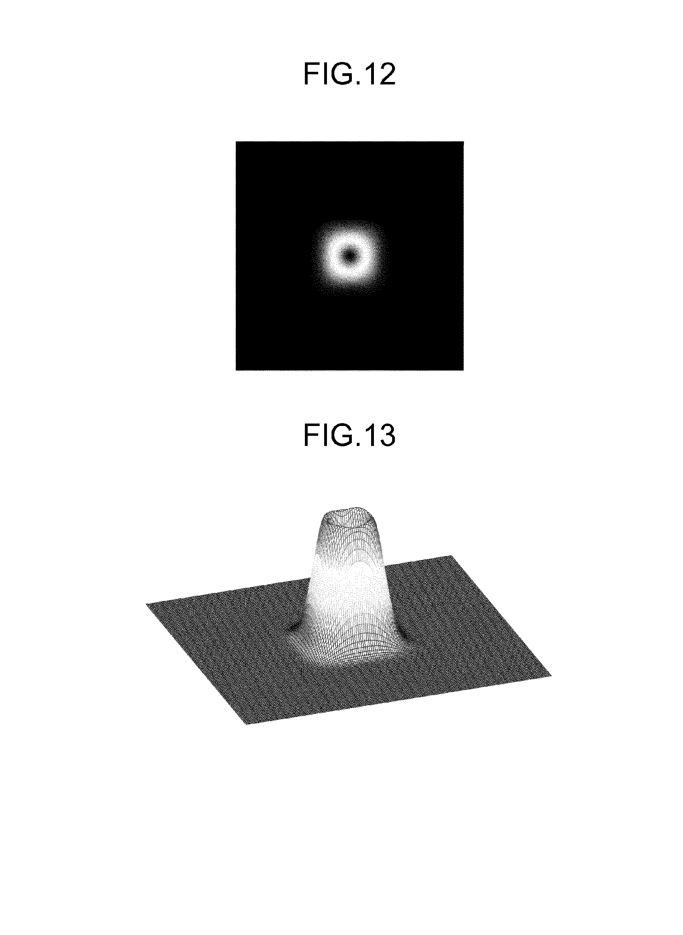

FIG. 11 is a diagram illustrating a part of the graph of the DiWI-PW7 filter that is taken out about a part with a significant change. FIG. 12 is a diagram representing the frequency characteristics of the DiWI-PW7 filter and FIG. 13 is a graph of the frequency characteristics of the DiWI-PW7 filter. A graph obtained by performing discrete Fourier transformation on the filter data, obtaining absolute values of respective components, performing periodical shifting (fftshift of Matlab) so as to position the zero frequency components at the center, and furthermore interpolating between points so as to display the graph as a continuous curved surface is referred to as the graph of the frequency characteristics of the filter.

As shown in FIGS. 11 to 13, it was found that the DiWI-PW7 filter functions as a band-pass filter capable of extracting the band components between the high and low frequency bands.

[Example of Creating Processed Image (diwi) using DiWI-PW7 Filter]

The result of image processing in which the DiWI-PW7 filter created as described above was applied to a mammographic image will be explained below. A processed image before being scaled by the scaling method to be described below is referred to as a "diwi" and an image obtained by scaling the "diwi" is referred to as a "DiWI".

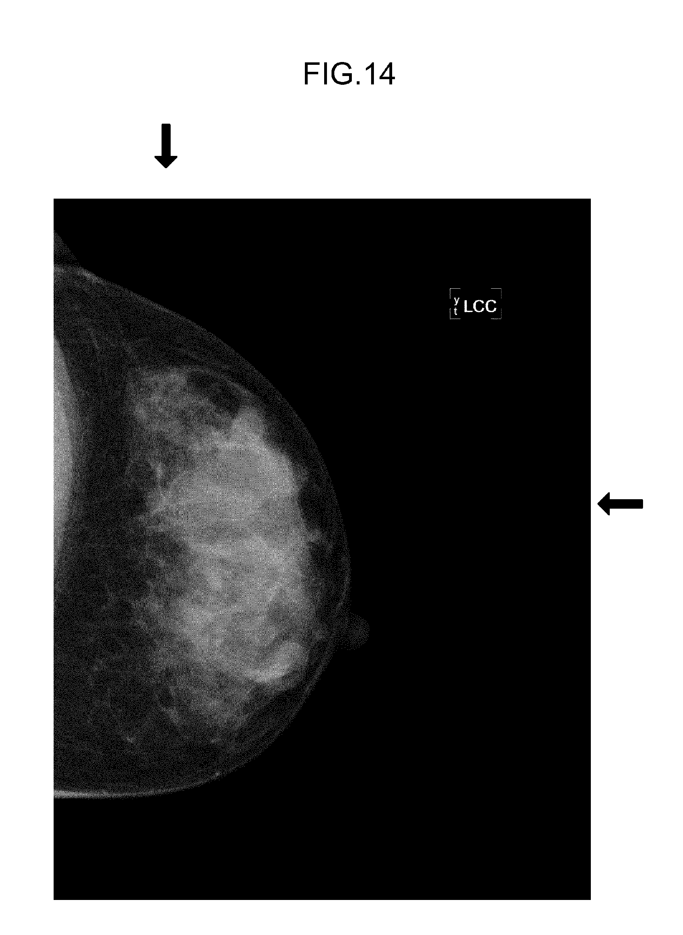

First, by applying the DiWI-PW7 filter to a mammographic image, a processed image from which a DiWI originates was created. In order to avoid distortion due to image processing at the boundary (edge) of the image, the mammographic image was extended to an appropriate size by a known method referred to as "symmetric extension". In other words, the mammographic image (3328×2560 (height × width)) was extended by 24 pixels upward, downward, rightward, and leftward to an image size of 3376 × 2608 (height × width). First, Sample 1 (FIG. 14) was extended with the above method. The arrows shown in FIG. 14 indicate the location of distortion, i.e., distortion can be viewed in an area where the lines extended from the two arrows intersect (this also applies to the arrows in the following drawings). Sample 1 represents a case in which it is difficult to detect an abnormality due to a high density of normal mammary gland referred to as dense breast in the background.

The cyclic convolution product of the extended mammographic image (FIG. 14) and the DiWI-PW7 filter created in 3376×2608 (height × width) was calculated. The cyclic correlation product may be calculated by a known high-speed calculation method using fast Fourier transformation.

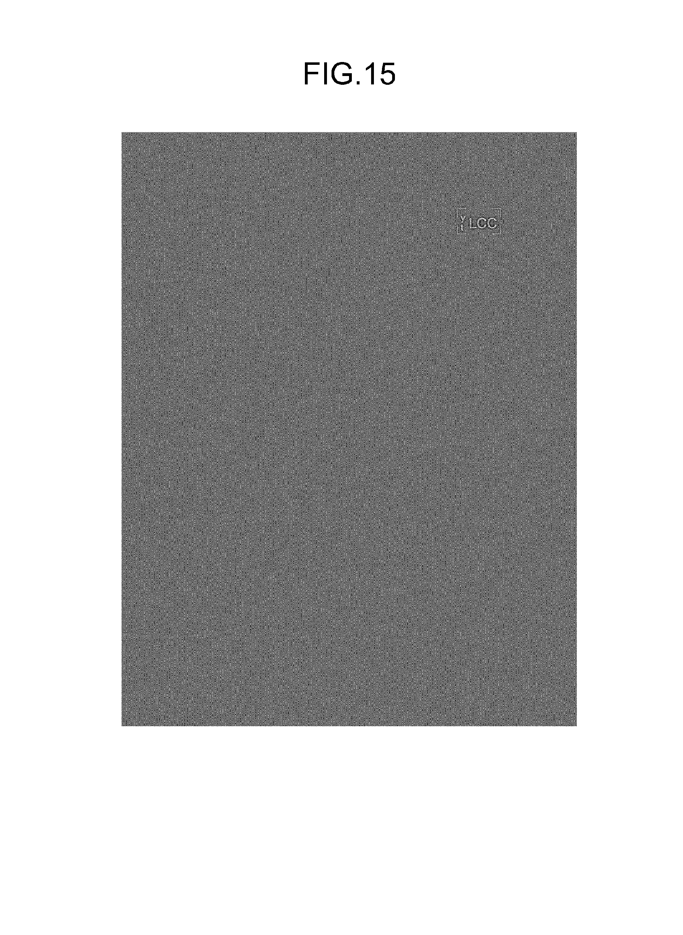

An image in the same size as that of the original mammographic image (3328×2560) that was taken out of the center of the image obtained by calculating the cyclic convolution product was created as a diwi. FIG. 15 is a diagram representing the image diwi that was taken out.

As shown in FIG. 15, the important mammary gland shows a low contrast and thus is difficult to see. This is because the symbolic expression ("$^y{}_tLCC$") etc. in the mammographic image was detected with high intensity. The symbol consists of letters inserted when mammographic X-ray imaging is performed. To identify the image, it is preferable that the symbol is not removed and is left. By applying appropriate scaling for the lightness of diwi, an image DiWI is created. In the example, the following processing was performed in order to scale the used medical image. The processing performed a method of estimating a scaling method for each image from a scaling method for which a doctor determines the method allows easy viewing with respect to a plurality of test images; however, another scaling method may be used.

First, a=56.1 was set for the base color of the image. In other words, the base color of the image is standardized to 56.1 from among 256 tones of 0 to 255. Here, X denotes the image data (a matrix consisting of numerical values of lightness at respective pixels) and S denotes the standard deviation of the array in which the part where $|X[j,k]|<30$ (where [j,k] is a set of pixel coordinates) among the components of X that is taken out and arrayed in a shape of a one-dimensional array. In other words, because a value of which absolute value is large among the image data X is a value corresponding to the "symbol part" ("$^y{}_tLCC$" etc.) of the mammographic image, the values for which $|X[j,k]|\geq30$ are ignored in order to avoid the effects of the difference of the symbol when the standard deviation is calculated.

By processing a test image A1 by using a pinwheel framelet according to the above-described method, a processed image diwi is obtained. Various types of scaling are performed on the processed image diwi and scaling scaling for which a specialist, such as a doctor, (who is trained in mammographic interpretation) has an impression that "the image is easy to view" is selected. Here, r1' denotes the bottom value for cutting the data and S' denotes the value of S corresponding to A1. Similarly, for a test image A2, r1" denotes the bottom value for cutting the data and S" denotes the value of S corresponding to A2.

Because the standard deviation S can be mathematically calculated for the processed image X obtained by processing a predetermined mammographic image by using the pinwheel framelet according to the above-described method, a bottom value r1 is determined by linear interpolation using the above-described r1', r1", s', and s''. Furthermore, from r1 and a, the top value r2 for cutting the data is determined. The test image and the equations obtained by the doctor are the followings.

$$r1=-3.3*S+0.6$$

$$r2=-r1/a*(255-a)$$

The image DiWI with the lightness Y after scaling is obtained according to the following equation where X' is data obtained by replacing values smaller than r1 among X with r1 and further replacing values larger than r2 with r2. In other words, the image DiWI is obtained by extending the range of tone values of r1 to r2 to 0 to 255 in the image X' where r1 denotes values smaller than the bottom value r1 to be cut off and r2 denotes values larger than the top value r2 to be cut off. This is the scaling method used in the example.

$$Y=(X'-r1)/(r2-r1)*255$$

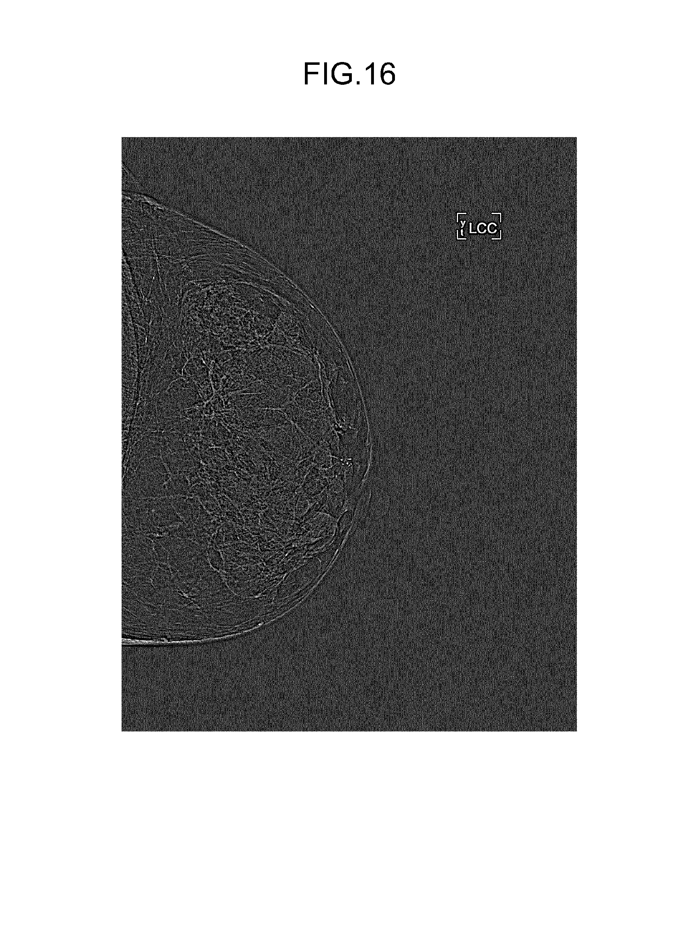

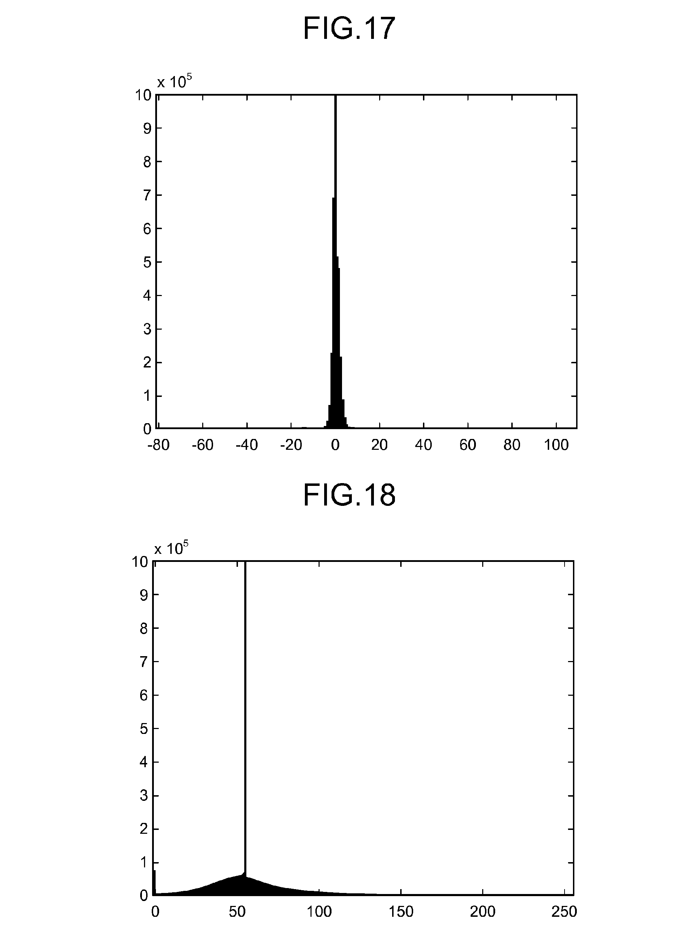

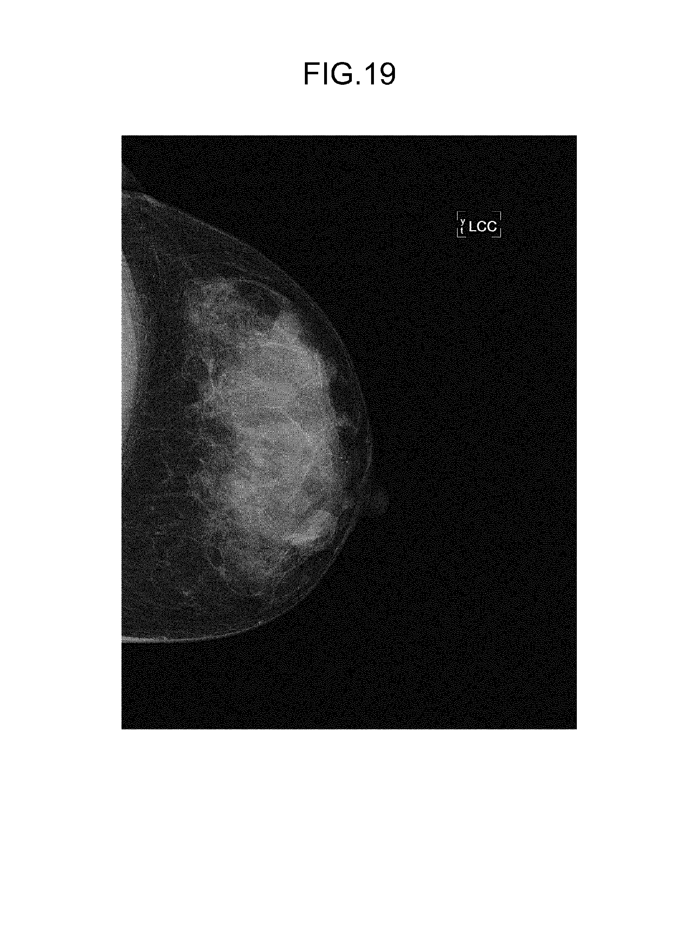

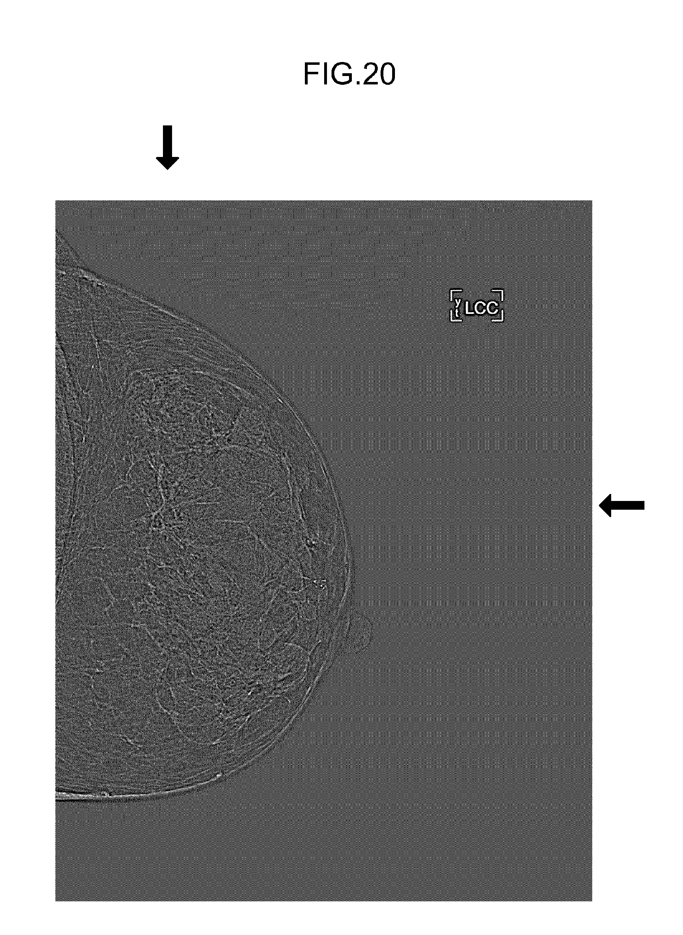

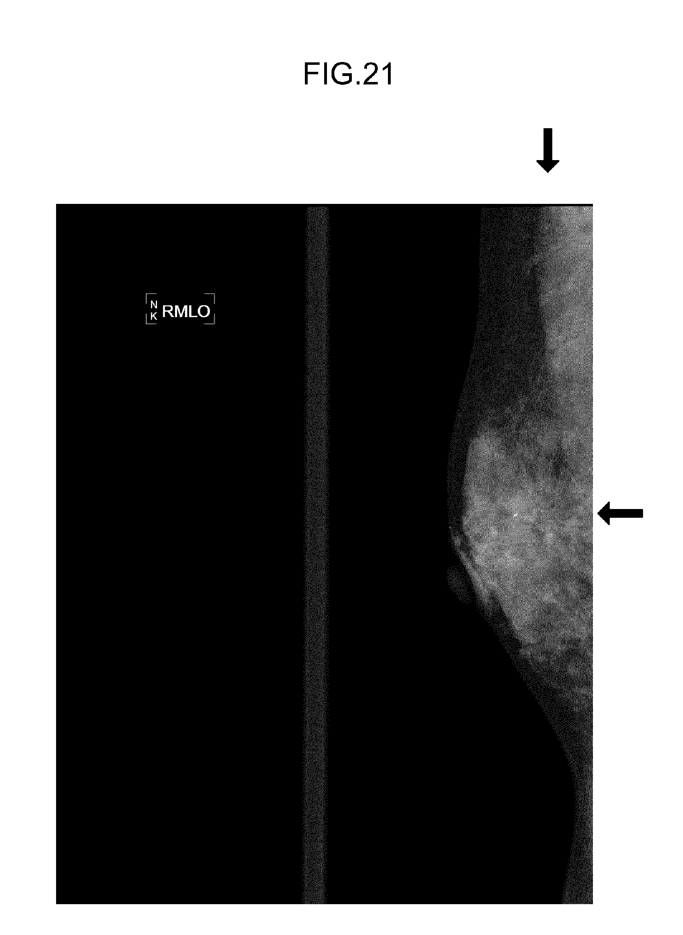

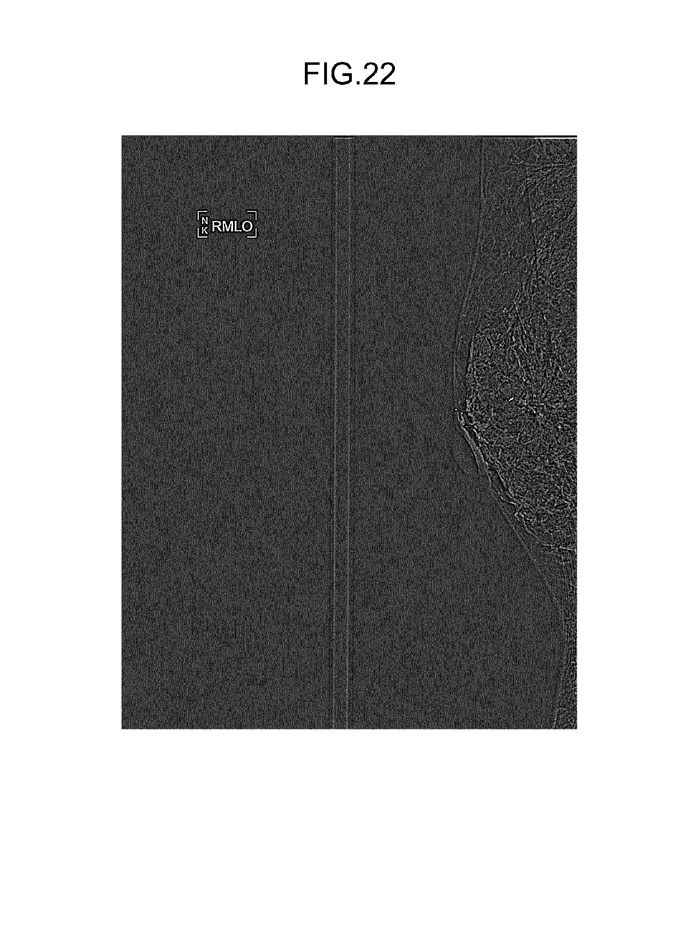

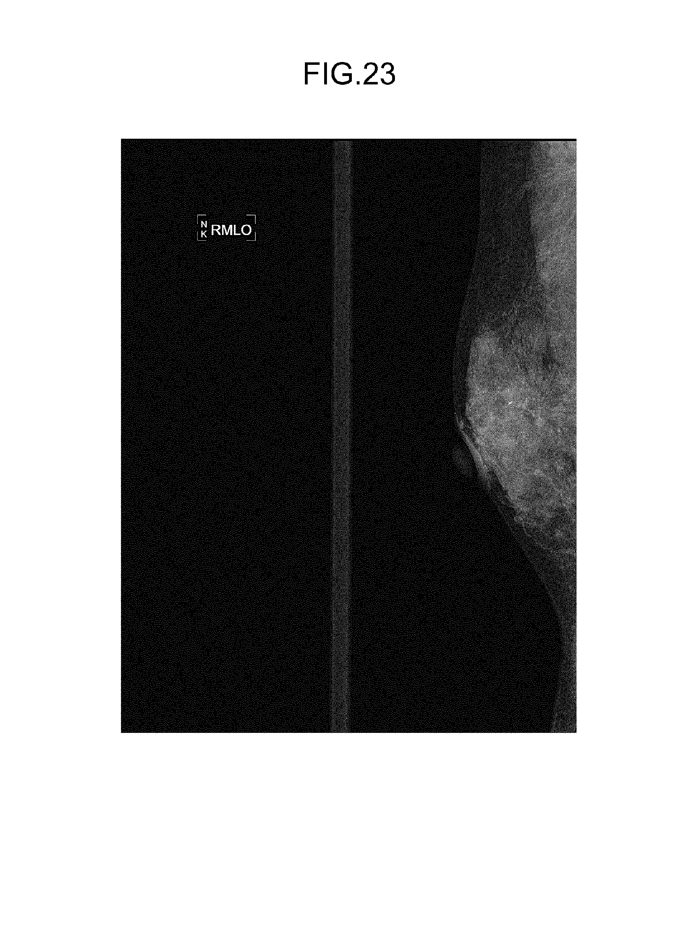

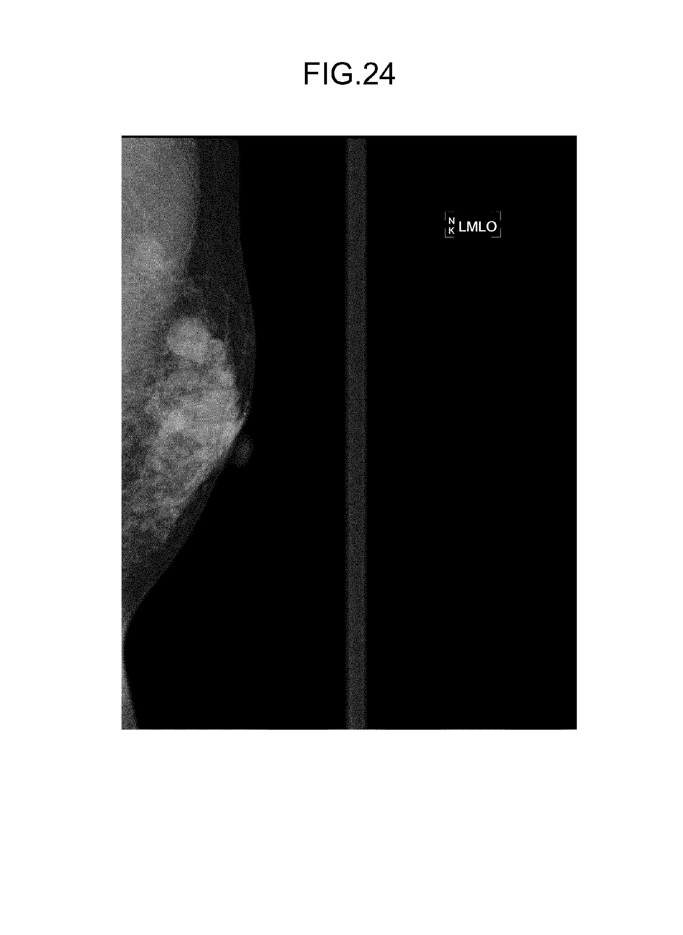

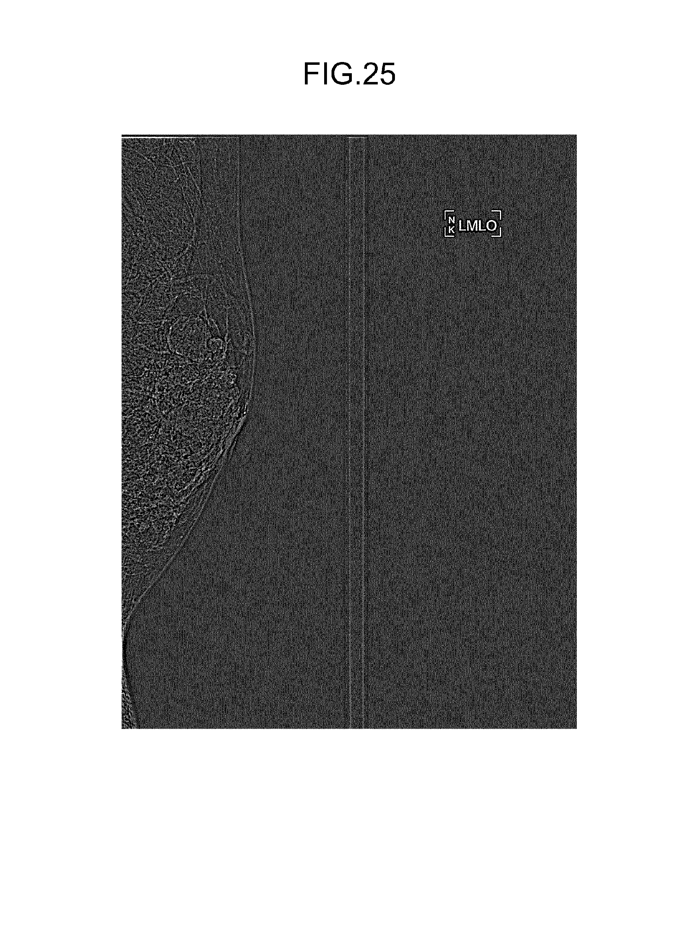

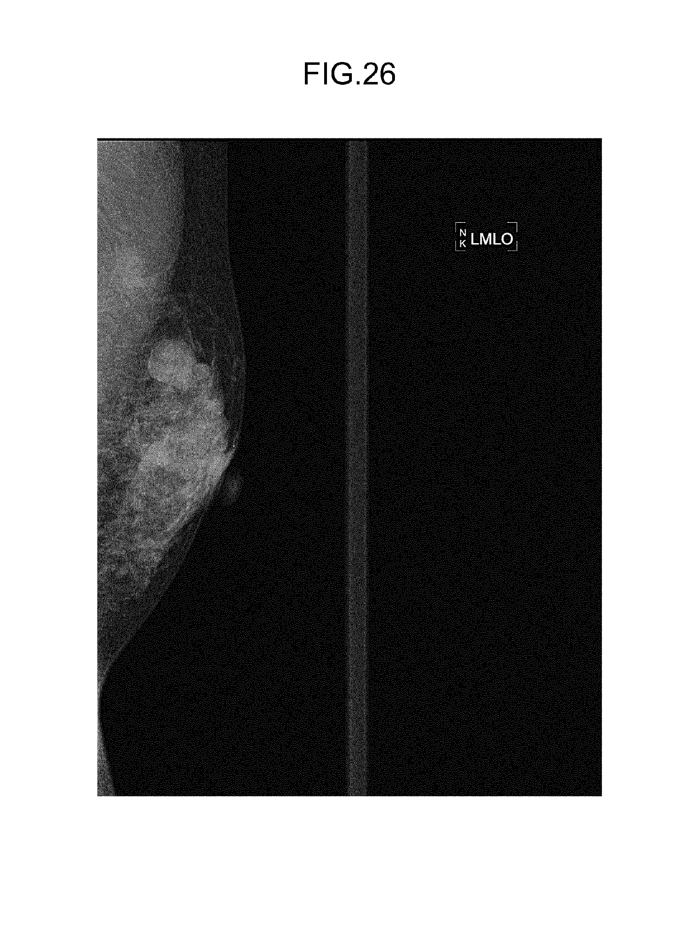

By applying the above-described scaling processing to the image diwi shown in FIG. 15, DiWI was obtained. FIG. 16 is a diagram of the image DiWI obtained by applying the scaling processing to the image diwi shown in FIG. 15.
As shown in FIG. 16, it was verified that, compared to both the mammographic image of FIG. 14 and the image diwi of FIG. 15, the image DiWI had few extra parts, such as a difference in gradation or a general change, and the mammary gland structure including distortion was in a clear image. As described above, as for the distortion slightly on the top left with respect to the center that is difficult to identify due to the overall high density (whiteness) in the original mammographic image shown in FIG. 14 in Sample 1, only the distortion part is clearly drawn in the processed image DiWI shown in FIG. 16. FIG. 17 is a diagram representing the lightness histogram of the image diwi and FIG. 18 is a diagram representing the lightness histogram of the image DiWI.
As shown in FIG. 17, it is indicated that, in the image diwi before the scaling processing, there is a concentration on equivalent intensities as a whole so that it is difficult to distinguish among the background, the mammary gland structure, the symbol, etc. On the other hand, as shown in FIG. 18, it was verified that, in the image DiWI after the scaling processing, the lightness does not concentrate on equivalent values and is distributed broadly and accordingly the background, the mammary gland structure, the symbol, etc. can be distinguished clearly as the differences in lightness. FIG. 19 is a diagram of an image obtained by summing the mammographic image (FIG. 14) and the image DiWI according to an appropriate ratio.
As shown in FIG. 19, the mammographic image and the processed image DiWI may be superimposed and represented to the user so as to allow the user to contrast them. In that case, the two images may be displayed while sequentially changing the ratio of the two images by using a slider, or the like. The summation creates an image can be created in which a part that is effective to evaluate distortion in the mammographic image. By superimposing the processed image having the lightness of any desired color component onto the mammographic image (grayscale), the mammary gland structure on the mammographic image may be distinguished by color. The image processing result may be colored without superimposition, without limited to being colored and superimposed on to the original image. FIG. 20 is a diagram representing the result of appropriately performing scaling on FIG. 15 and then coloring it. For coloring, a color map named bone by Matlab was used. The bone is a grayscale color map having an increased value of blue components and another known method may be used as a coloring method. The processed image that is properly colored as descried above (colored DiWI) has an advantage that distortion is viewed easily (distortion is seen at the location where the lines extending from the two arrows shown in FIG. 20 intersect).
As for other samples (Samples 2 and 3) in addition to Sample 1, it was verified that the processing using the filter of the example can make the mammary gland structure clear. FIG. 21 is a diagram representing a mammographic image of Sample 2 (distortion is viewed at a location where the lines extending from the two arrows shown in FIG. 21 intersect). FIG. 22 is a diagram representing a processed image DiWI of Sample 2 and FIG. 23 is a diagram representing an image obtained by summing the mammographic image (FIG. 21) and the processed image DiWI (FIG. 22) according to an appropriate ratio. FIG. 24 is a diagram representing a mammographic image of Sample 3, FIG. 25 is a diagram representing a processed image DiWI of Sample 3, and FIG. 26 is a diagram representing an image obtained by summing the mammographic image (FIG. 24) and the processed image DiWI (FIG. 25) according to an appropriate ratio. FIG. 21 and FIG. 24 are right and left mammographic images of the same person.

As Sample 1 represents, Sample 2 represents a case of dense breast in which distortion is shown at the center of the mammographic image (FIG. 21). While diagnosticians who used to deal with such cases would not hesitate, the lightness of a part where the surrounding density is high lowers in the processed image DiWI and the distortion is depicted very finely. Accordingly, by summing the original image and the processed image, an image (FIG. 23) where the distortion in the mammographic image is enhanced could be created.

While Sample 3 is an example without distortion, a circular tumor is viewed in the mammographic image (FIG. 24). It was verified that, even when there is no distortion, the surrounding mammary gland structure including the circular tumor was clearly depicted in the processed image DiWI (FIG. 25). By summing the original image and the processed image, an image (FIG. 26) in which the mammary gland structure in the mammographic image is enhanced could be created.

[Example of Creating Directional DiWI Filter and Processed Image]

As for the DiWI-PW7 filter created as described above and depicted according to the example in FIGS. 11 to 13, a filter that makes an increase/reduction in all directions uniformly was designed as an example; however, without being limited to this, the filter may be designed to extract or reduce a specified particular direction. In the example, an example of designing filters for generating a processed image in which the mammary gland direction is reduced and a processed image in which the mammary gland direction is extracted.

In general, the mammary glands are arranged radially from the papilla and are generally symmetrical between the right and left breasts. In consideration for the characteristic, by creating a filter that reduces or extracts a specified particular direction, it is possible to output a processed image in which the mammary glands in the standard direction are reduced or a processed image in which the standard mammary gland direction is extracted.

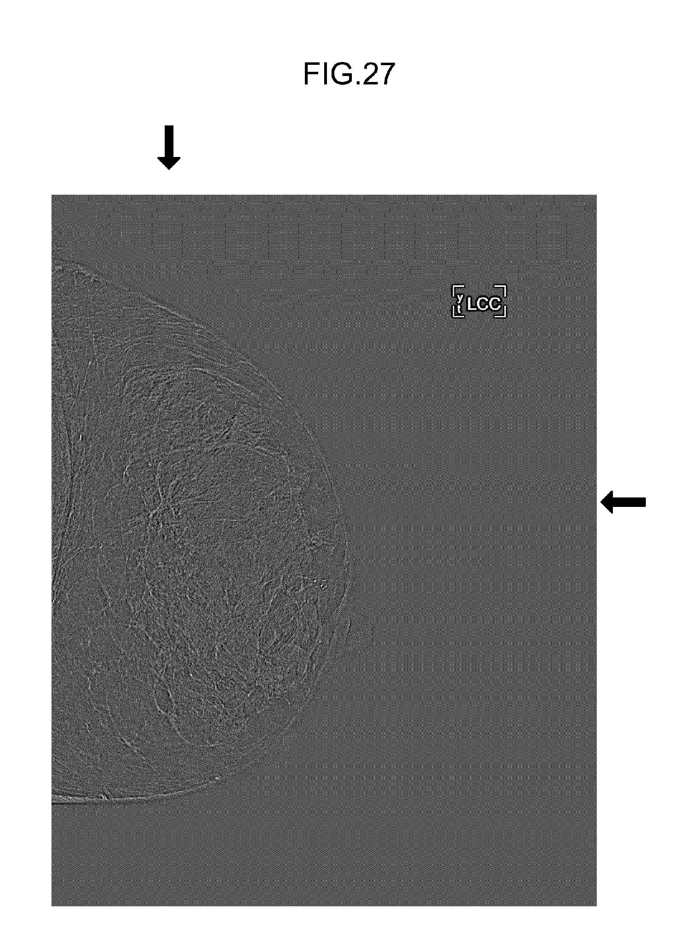

FIG. 27 is a diagram of a processed image in which the standard mammary gland direction is reduced and that is created by relatively amplifying the band components between the high and low frequency bands in FIG. 14 and further relatively attenuating the components in the standard mammary gland direction. The arrows indicate the position of distortion. According to the difference in direction, eight types of filters are created that pass the frequencies of the band between the high and low frequency bands and have orientations and a processed image is created by putting the output images from the respective filters together. It was verified that, as shown in FIG. 27, reducing the standard mammary gland direction makes it easy to view the distortion.

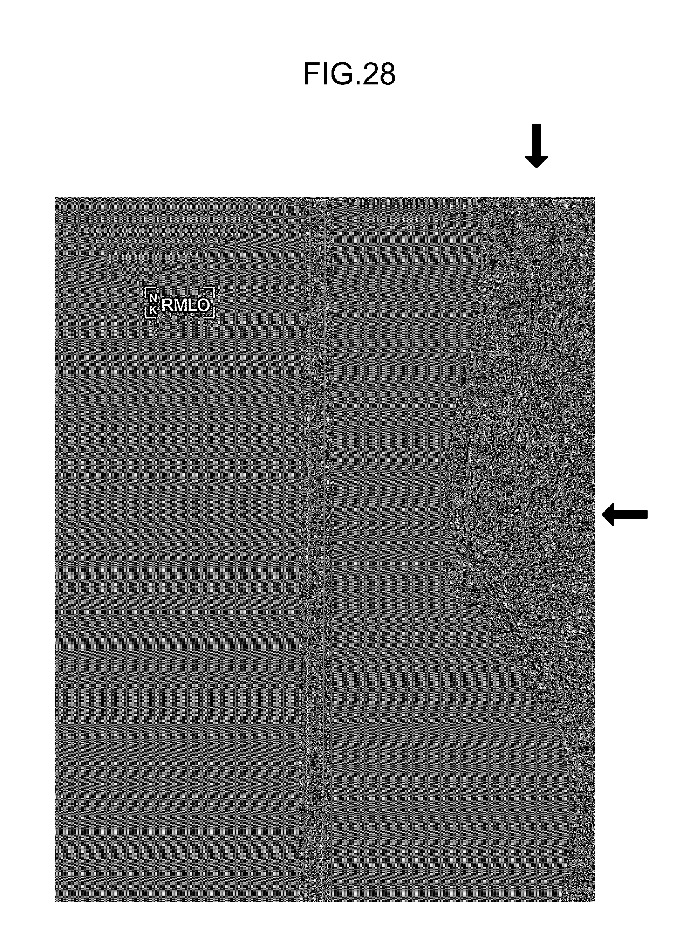

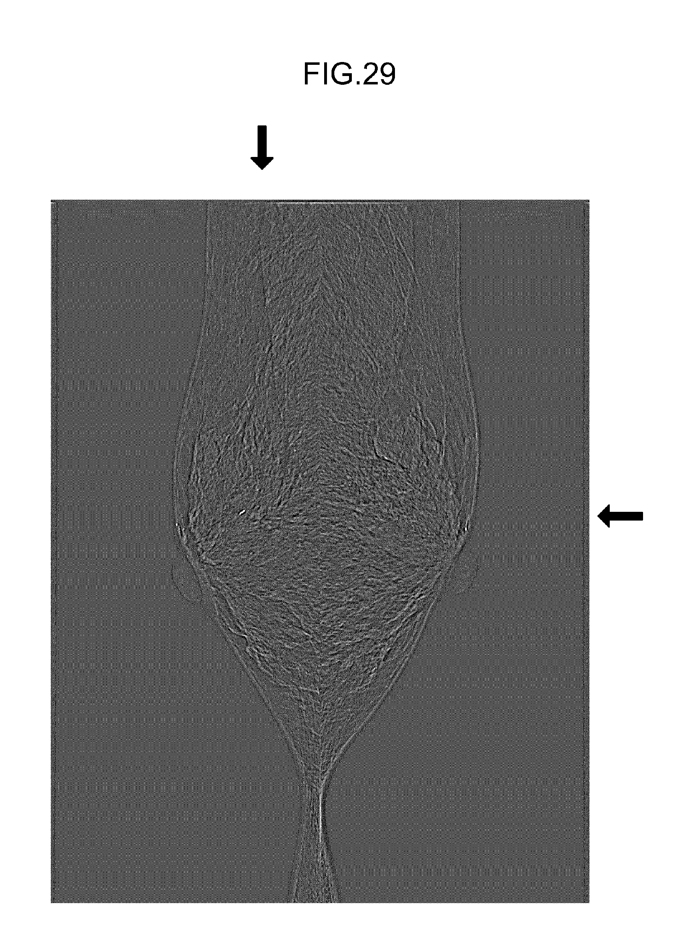

FIG. 28 is a diagram representing an image in which the standard mammary gland direction is extracted and that is created by relatively amplifying the band components between the high and low frequency bands in FIG. 21 and further relatively amplifying the components having the standard mammary gland direction. The arrows indicate the position of distortion. Also in this case, according to the difference in orientation, eight types of filters are created that pass frequencies of the band between the high and low frequency bands and have orientations and an image is created by putting the output images from the respective filters together. Furthermore, when, as for the same person, the processed image according to the left (LMLO) obtained by processing the mammographic original image in FIG. 24 in the same manner and the processed image according to the right (RMLO) in FIG. 28 are put side-by-side and compared with respect to the symmetry, it is much easier to recognize the asymmetric distortion between the left and right (see FIG. 29). FIG. 29 is a diagram obtained by putting side-by-side the processed images obtained by processing the left and right mammographic original images in FIGS. 21 and 24. It can be viewed that, as shown in FIG. 29, there is image distortion at the distortion part.

These types of directional DiWI may be used together with the above-described DiWI, and the ratio of each image may be changed gradually using a slider or the like. Furthermore, the directional DiWI and DiWI may be superimposed according to an appropriate ratio to create an image in which a specified particular direction is enhanced.

[Superimposition of Low-frequency image and Processed Image]

In FIG. 19, the example has been described in which a mammographic original image and a processed image DiWI are superimposed so as to contrast them. The superimposition is not limited to this, but processed images may be superimposed on one another. For example, an example will be described in which a low-frequency image and a processed image are superimposed on one another.

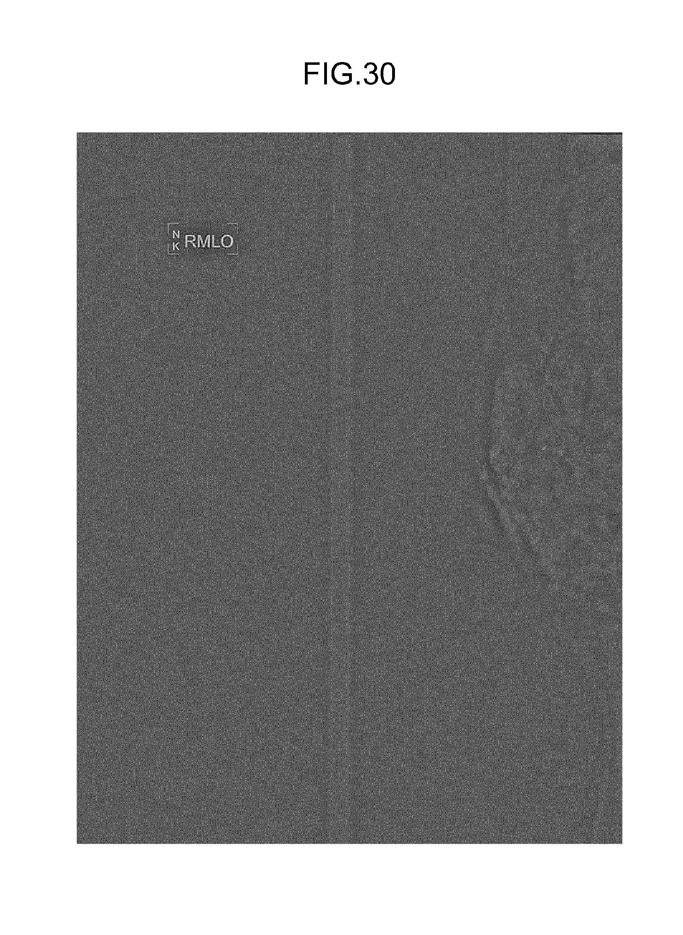

FIG. 30 is a diagram of an image obtained by superimposing the relatively low-frequency part in FIG. 21 onto the diwi shown in FIG. 21 (the image before scaling) according to an appropriate ratio and appropriately performing scaling thereon. In this example, the lowest frequency part is not added. As shown in FIG. 30, while the relatively high frequencies are enhanced in the image, the state of low frequencies can be viewed to some extent and the degree of density can be seen, which is effective for visibility depending on the cases.

As described above, the image onto which a processed image is to be superimposed may be a low-frequency image other than a mammographic image. The processed image may be any one of a diwi, a DiWI, a directional diwi, and a directional DiWI. The ratio according to which images are superimposed may be adjusted by using a slider or the like.

Here is the end of explanation of the example.

There has been no case where the image processing using the pinwheel framelet according to the embodiment is used for image processing in medical fields, and it is a quite new methodology. In other words, according to the prior art that relates to mammographic image processing methods, there has been no case to which development of methodologies to perform image processing dedicated to distortion, focusing an attention on the heuristic knowledge about human image evaluation by humans, is adapted and thus it is a quite new methodology.

According to the embodiment, designing filters that doctors who are experts in evaluating mammary gland images think "they are suitable for evaluating distortion" makes it possible to design filters into which the evaluation know-how by humans that has come with medical practices is taken. According to the embodiment, in filter designing, appropriate filters are selected from a group of filters that constitute a pinwheel framelet and the selected filters are synthesized into a filter capable of high-speed calculations.

According to the embodiment, appropriate low-frequency components are cut clearly in a mammographic image, which makes it possible to find distortion easily by removing the difference in gradation or a general change and removing an extra part. At the same time, high frequencies are cut appropriately, which makes it possible to remove high-frequency components that make it difficult to detect noise and distortion.

[Pinwheel Framelet]

In the embodiment, as described above, a pinwheel framelet to be used as an example may be a wavelet frame with orientation selectivity, such as the well-known simple pinwheel framelet or pinwheel wavelet frame, or a filterbank with orientation selectivity. A pinwheel framelet will be described below (see International Publication Pamphlet No. WO 2012/067254).

Suppose the degree n is odd and n≥3. Take an $(n+1) \times (n+1)$ symmetric matrix $A=(A_{k,l})$ satisfying that $A_{s,t}=A_{n-s,t}=A_{s,n-t}=A_{n-s,n-t}=s$ for s=0,1,...,[n/2], and t=s,..., [n/2], where [] is the Gauss symbol.

If n=7, the following matrix satisfies the condition.

$$
A = \begin{pmatrix}
0 & 0 & 0 & 0 & 0 & 0 & 0 & 0 \\
0 & 1 & 1 & 1 & 1 & 1 & 1 & 0 \\
0 & 1 & 2 & 2 & 2 & 2 & 1 & 0 \\
0 & 1 & 2 & 3 & 3 & 2 & 1 & 0 \\
0 & 1 & 2 & 3 & 3 & 2 & 1 & 0 \\
0 & 1 & 2 & 2 & 2 & 2 & 1 & 0 \\
0 & 1 & 1 & 1 & 1 & 1 & 1 & 0 \\
0 & 0 & 0 & 0 & 0 & 0 & 0 & 0
\end{pmatrix}
$$

If the matrix is given by $B=(B_{k,l}):(n+1) \times (n+1)$, B is a matrix satisfying the following condition (P).

$$
\text{Condition (P)} : \begin{cases}
B_{k,l} = B_{l,k} \\
B_{k,l} = B_{n-k,l} = B_{k,n-l} = B_{n-k,n-l} \\
B_{k,l} \geq 0
\end{cases}
$$

$$
n_0 = \left[ \frac{n}{2} \right]
$$

*there are* $\frac{1}{2}(n_0 + 1)(n_0 + 2)$ *free variables*

$$F_{k,l}^{1}(\theta_1, \theta_2) = \frac{1}{2}|\det \mathrm{M}|^{1/2} i^{k+l+A_{k,l}} e^{-\pi i\theta_1} e^{-\pi i\theta_2} \sqrt{B_{k,l}} \cos^{n-k-A_{k,l}}(\pi x) \sin^{k-A_{k,l}}(\pi x)$$
$$\times \cos^{n-l-A_{k,l}}(\pi y) \sin^{l-A_{k,l}}(\pi y)$$
$$\times \left(-\cos(\pi x)\sin(\pi x) + \cos(\pi y)\sin(\pi y)\right)^{A_{k,l}}$$

$$F_{k,l}^{2}(\theta_1, \theta_2) = \frac{1}{2}|\det \mathrm{M}|^{1/2} i^{k+l+A_{k,l}} e^{-\pi i\theta_1} e^{-\pi i\theta_2} \sqrt{B_{k,l}} \cos^{n-k-A_{k,l}}(\pi x) \sin^{k-A_{k,l}}(\pi x)$$
$$\times \cos^{n-l-A_{k,l}}(\pi y) \sin^{l-A_{k,l}}(\pi y)$$
$$\times \left(\cos(\pi x)\sin(\pi x) + \cos(\pi y)\sin(\pi y)\right)^{A_{k,l}}$$

where M is a sampling matrix of a square lattice, a quincunx lattice, or a hexagonal lattice.

$$f_{k,l}^{1} \leftrightarrow F_{k,l}^{1}; f_{k,l}^{2} \leftrightarrow F_{k,l}^{2}$$

$$\Lambda_f = \{(0,0), (0, n), (n,0), (n, n)\}$$

$$\Lambda_g = \{(k, l)\}_{k=0,n;l=1,\cdots,n-1} \cup \{(k, l)\}_{l=0,n;k=1,\cdots,n-1}$$

$$\Lambda_a = \{(k, l)\}_{k=1,\cdots,n-1;l=1,\cdots,n-1}$$

$$P_n = \left\{\sqrt{2}f_{k,l}^{1}\right\}_{(k,l)\in\Lambda_f \cup \Lambda_g} \cup \left\{f_{k,l}^{1}\right\}_{(k,l)\in\Lambda_a} \cup \left\{f_{k,l}^{2}\right\}_{(k,l)\in\Lambda_a}$$

Lemma 2 (H.&S. Arai, 2008) The necessary and sufficient condition that Pn be a framelet filter relating to a square lattice, a quincunx lattice, or a hexagonal lattice is that B=($B_{k,l}$) satisfies the following condition.

$$\sum_{k=0}^{n}\sum_{l=0}^{n}\sum_{j=1}^{2}\left|F_{k,l}^{j}(\theta_1,\theta_2)\right|^2 \equiv |\det M|$$

<Method of determining B=($B_{k,l}$) satisfying the above condition>

{(k,l):k=0, 1, ..., $n_0$, l=s, ..., $n_0$,} is ordered as follows.

| (0,0) | (0,1) | (0,2) | $\cdots$ | $(0, n_0 - 1)$ | $(0, n_0)$ |
|---|---|---|---|---|---|
| | (1,1) | (1,2) | $\cdots$ | $(1, n_0 - 1)$ | $(1, n_0)$ |
| | | | $\ddots$ | $\vdots$ | $\vdots$ |
| | | | | $(n_0 - 1, n_0 - 1)$ | $(n_0 - 1, n_0)$ |
| | | | | | $(n_0, n_0)$ |

$$\Updownarrow$$

| 1 | 2 | 3 | $\cdots$ | $n_0$ | $n_0 + 1$ |
|---|---|---|---|---|---|
| | $n_0 + 2$ | $n_0 + 3$ | $\cdots$ | $2n_0$ | $2n_0 + 1$ |
| | | | $\ddots$ | $\vdots$ | $\vdots$ |
| | | | | $\frac{1}{2}n_0(n_0 + 3) - 1$ | $\frac{1}{2}n_0(n_0 + 3)$ |
| | | | | | $\frac{1}{2}n_0(n_0 + 1)(n_0 + 2)$ |

$\mu=(k, 1), \nu=(k', l')$

$$
\begin{aligned}
K_{\mu,\nu} &= 2^{3-4n+4k}(-1)^l \sum_{p=0}^{k}\left\{\binom{2k}{2p}\left[\left[\sum_{q=0}^{2k-2p}(-1)^q\binom{-2k-2p+2n}{2k'-2p+n-q}\binom{2k-2p}{q}\right]\right.\right. \\
&\quad \times \left[\sum_{q=0}^{2p+2l-2k}(-1)^q\binom{2p+2n-2k-2l}{2l'+2p+n-2k-q}\binom{2p+2l-2k}{q}\right]\right] \\
&\quad + \left[\sum_{q=0}^{2k-2p}(-1)^q\binom{-2k-2p+2n}{2l'-2p+n-q}\binom{2k-2p}{q}\right] \\
&\quad \left.\left.\times\left[\sum_{q=0}^{2p+2l-2k}(-1)^q\binom{2p+2n-2k-2l}{2k'+2p+n-2k-q}\binom{2p+2l-2k}{q}\right]\right]\right\}
\end{aligned}
$$

$$
\begin{pmatrix}
K_{1,1} & \cdots & K_{1,\frac{1}{2}(n_0+1)(n_0+2)} \\
\vdots & \ddots & \vdots \\
K_{\frac{1}{2}(n_0+1)(n_0+2),1} & \cdots & K_{\frac{1}{2}(n_0+1)(n_0+2),\frac{1}{2}(n_0+1)(n_0+2)}
\end{pmatrix}
\begin{pmatrix}
X_1 \\
X_2 \\
\vdots \\
X_{\frac{1}{2}(n_0+1)(n_0+2)}
\end{pmatrix}
=
\begin{pmatrix}
4 \\
0 \\
\vdots \\
0
\end{pmatrix}
$$

$$
B_{k,1} = \begin{cases} 2X_s & s = \frac{1}{2}(k-1)(2n_0 - k + 4) + 1, \; k = 1, \cdots, n_0 \\ X_s & \text{other} \end{cases}
$$

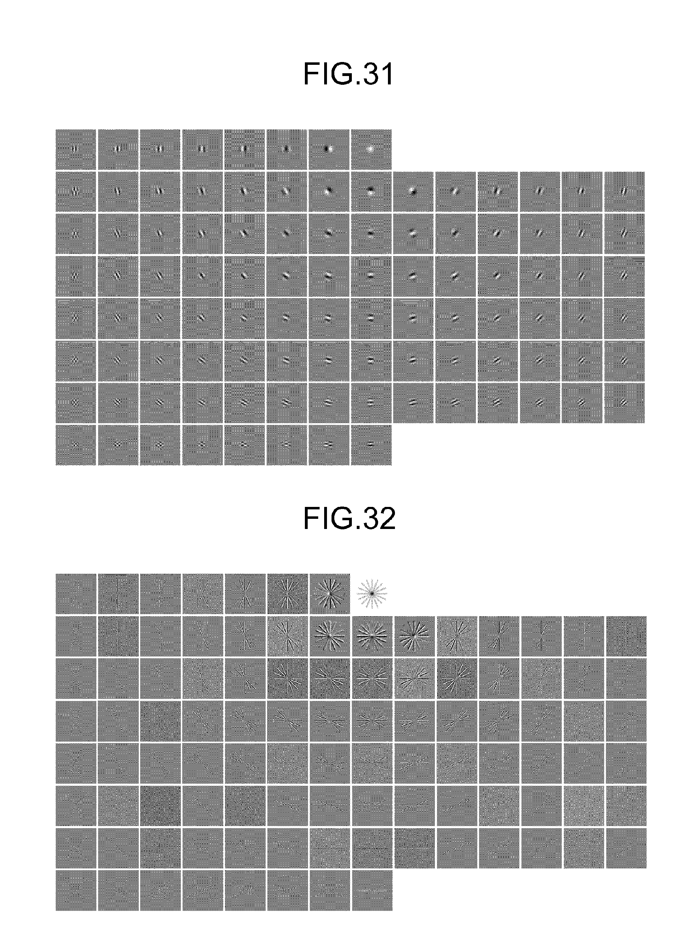

Theorem 3 (H.&S. Arai, 2008) B=($B_{k,l}$) determined above satisfies Lemma 2. Therefore, Pn is a framelet filter relating to a square lattice, a quincunx lattice, or a hexagonal lattice. Pn is referred to as a pinwheel framelet of degree n. FIG. 31 is a diagram illustrating the filters obtained by calculating the cyclic correlation product of maximum overlap pinwheel framelet filters at level 2 and an approximate filter at level 1. FIG. 32 is a diagram illustrating each synthesized subband signal of the result obtained by performing the 2nd stage of maximal overlap MRA decomposition by a pinwheel framelet on an image composed of line segments in various directions.

This is the end of the explanation of the embodiment.

[Other Embodiments]

The embodiment of the present invention has been described above, and the present invention can be implemented by various different embodiments within the scope of the technical idea described in the claims in addition to the above-described embodiment.

Particularly, for the above-described embodiment, an example using a pinwheel framelet is explained. However, the embodiment is not limited to this, but, if the frequency characteristics are known, by creating filters having similar frequencies with another method without using the pinwheel framelet, it is possible to obtain similar results.

For example, for the embodiment, an explanation is given of the case where the image processing apparatus 100 performs the processing in stand-alone mode as an example; however, the image processing apparatus 100 may perform the processing in response to a request from a client terminal (a tablet terminal or the like that is a cabinet different from the image processing apparatus 100) and return the processing results (such as processed image data) to the client terminal. For example, the image processing apparatus 100 may be configured as an ASP server, receive image data of a mammographic image transmitted from a user terminal via the network 300, and return processed image data processed on the basis of this image data to enhance distortion to the user terminal.

Moreover, among the processings described in the embodiment, all or part of the processings described as automatic processing may be performed manually and all or part of the processings described as manual processing may be performed automatically by well-known methods.

In addition thereto, the processing procedures, the control procedures, the specific names, the information including registered data of each processing and parameters, such as retrieval conditions, the screen examples, and the database configurations, described in the literature and drawings above may be arbitrarily modified unless otherwise indicated.

Furthermore, each component of the image processing apparatus 100 illustrated in the drawings is formed on the basis of functional concept, and is not necessarily configured physically the same as those illustrated in the drawings.

For example, all or any part of the processing functions that the devices in the image processing apparatus 100 have, and particularly each processing function performed by the control unit 102, may be implemented by a central processing unit (CPU) and a program interpreted and executed by the CPU, or may be implemented as hardware by wired logic. The program is recorded in a recording medium to be described later and is mechanically read into the image processing apparatus 100 as necessary. Specifically, the storing unit 106, such as a ROM and an HDD, or the like records a computer program for providing instructions to the CPU in cooperation with the OS (Operating System) and for executing various processings. This computer program is executed by being loaded into a RAM and configures the control unit in cooperation with the CPU.

Moreover, this computer program may be stored in an application program server that is connected to the image processing apparatus 100 via the arbitrary network 300, and all or part thereof may be downloaded as necessary.

Furthermore, the program according to the present invention may be stored in a computer-readable recording medium and may be configured as a program product. The "recording medium" includes any "portable physical medium", such as a memory card, a USB memory, an SD card, a flexible disk, a magneto-optical disk, a ROM, an EPROM, an EEPROM, a CD-ROM, an MO, a DVD, and a Blue-ray Disc.

Moreover, the "program" refers to a data processing method written in any language and any description method and is not limited to a specific format, such as source codes and binary codes. The "program" is not necessarily configured unitarily and includes a program constituted in a dispersed manner as a plurality of modules and libraries and a program that implements its functions in cooperation with a different program representative of which is an OS (Operating System). Well-known configurations and procedures can be used for the specific configuration and reading procedure for reading a recording medium, the installation procedure after reading a recording medium, and the like in each device illustrated in the present embodiment.

Various databases and the like (the filter file 106a and the image data file 106b) stored in the storing unit 106 are a storage unit, examples of which are a memory device, such as a RAM and a ROM, a fixed disk drive, such as a hard disk, a flexible disk, and an optical disk, and store various programs, tables, databases, files for web pages, and the like that are used for various processings or providing websites.

Moreover, the image processing apparatus 100 may be configured as an information processing apparatus, such as well-known personal computer and workstation, or may be configured by connecting an arbitrary peripheral device to the information processing apparatus. Moreover, the image processing apparatus 100 may be realized by installing software (including program, data, and the like) that causes the information processing apparatus to realize the method in the present invention.

Furthermore, a specific form of distribution/integration of the devices is not limited to those illustrated in the drawings, and all or a part thereof can be configured by functionally or physically distributing or integrating them in any desired units according to, for example, various additions, or according to functional loads. In other words, the above-described embodiments may be implemented by combining them in any desired manner, or the embodiments may be selectively performed. Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

Industrial Applicability

As described above, according to the present invention, it is possible to provide a digital filter for image processing, an image processing apparatus, a printing medium, a recording medium, an image processing method, a program, and a recording medium that allow image processing that enhances distortion in a mammographic image and thus they are quite useful in various fields including medical practices, pharmacy, drug discovery, biological studies, and clinical examinations.

Reference Signs List

| 100 | image processing apparatus |
| 102 | control unit |
| 102a | filter processing unit |
| 102b | decomposing unit |
| 102c | reconstructing unit |
| 102d | weighting unit |
| 102e | image size and lightness adjusting unit |
| 102f | color space conversion unit |
| 102g | processed image output unit |
| 104 | communication control interface unit |
| 106 | storing unit |
| 106a | filter file |
| 106b | image data file |
| 108 | input/output control interface unit |
| 112 | input device |
| 114 | output device |
| 200 | external system |
| 300 | network |

**Claims**

1.  A digital filter for image processing for supporting breast cancer diagnosis, the digital filter comprising:

    an image processing unit that generates processed image data in which distortion due to breast cancer is enhanced by performing, on mammographic image data, image processing that relatively amplifies medium band components between high and low frequency bands and/or image processing that increases or reduces components having predetermined orientations.

2.  The digital filter for image processing according to claim 1, wherein
    the image processing unit includes:

    a decomposing unit that obtains subband signals by performing multiresolution decomposition on image data with any one of a wavelet frame with orientation selectivity and a filterbank with orientation selectivity, each of which is a set of an approximate filter with no orientation and a plurality of detail filters with respective orientations; and
    a reconstructing unit that obtains reconstructed image data by reconstructing an image by summing the subband signals obtained by the decomposing unit;
    wherein
    the reconstructing unit obtains the reconstructed image data as the processed image data by attenuating the subband signals corresponding to the filters on a low-frequency side and a high-frequency side from among the filters and/or by amplifying the subband signals corresponding to the filters on a medium frequency side including a relatively low-frequency side and a relatively high-frequency side from among the filters.

**3.** The digital filter for image processing according to claim 2, wherein the frequency characteristics of the filters are specified by the positions in a predetermined filter arrangement based on orientations at each level of the wavelet frame with orientation selectivity and the filterbank with orientation selectivity and/or the level in the multiresolution decomposition.

**4.** The digital filter for image processing according to claim 2 or 3, wherein the reconstructing unit relatively attenuates the subband signals corresponding to the approximate filter at a predetermined level in the multiresolution decomposition and attenuates the subband signals corresponding to the detail filters on a high-frequency side from among the detail filters.

**5.** The digital filter for image processing according to any one of claims 2 to 4, wherein the decomposing unit attenuates or amplifies the corresponding subband signals by weighting the filters in a decomposition phase and/or a synthesis phase of any one of the wavelet frame with orientation selectivity and the filterbank with orientation selectivity.

**6.** The digital filter for image processing according to any one of claims 2 to 5, wherein the reconstructing unit obtains the reconstructed image data by weighting frequency response functions for the respective filters of any one of the wavelet frame with orientation selectivity and the filterbank with orientation selectivity, applying multiplication and addition to the weighted frequency response functions, deriving filter coefficients from the result, and performing filtering on the image data by using filters constituted of the filter coefficients.

**7.** The digital filter for image processing according to any one of claims 2 to 6, wherein the decomposing unit and the reconstructing unit obtain the reconstructed image data by using a unit impulse response that is obtained in advance in response to a unit impulse signal for the same number of pixels as that of the image data and calculating a cyclic convolution product using the unit impulse response for the image data.

**8.** The digital filter for image processing according to any one of claims 2 to 7, wherein any one of the wavelet frame with orientation selectivity and the filterbank with orientation selectivity is a broad-sense pinwheel framelet that has a degree.

**9.** A digital filter for image processing that enhances distortion in a mammographic image in order to support breast cancer diagnosis, the digital filter being a unit impulse response to a unit impulse signal that is obtained, when an image is reconstructed by summing subband signals obtained by performing multiresolution decomposition on the unit impulse signal for the same number of pixels as that of image data with any one of a wavelet frame with orientation selectivity and a filterbank with orientation selectivity, each of which is a set of an approximate filter with no orientation and a plurality of detail filters with respective orientations, by attenuating the subband signals corresponding to the filters on a low-frequency side and a high-frequency side from among the filters and/or by amplifying the subband signals corresponding to the filters on a medium frequency side including a relatively low-frequency side and a relatively high-frequency side from among the filters so as to relatively amplify medium band components between high and low frequency bands and/or so as to increase or reduce components having predetermined orientations and/or by increasing or reducing the subband signals corresponding to the filters that have the predetermined orientations.

**10.** A digital filter for image processing that enhances distortion in a mammographic image in order to support breast cancer diagnosis, the digital filter being created by calculating filter coefficients by weighting, with predetermined weights, frequency response functions for respective filters of any one of a wavelet frame with orientation selectivity and a filterbank with orientation selectivity, each of which is a set of an approximate filter with no orientation and a plurality of detail filters with respective orientations, so as to relatively amplify medium band components between high and low frequency bands and/or increase or reduce components having predetermined orientations and by applying multiplication and addition to the weighted frequency response functions with a predetermined method, wherein
the predetermined weights include a weight that attenuates the subband signals corresponding to the filters on a low-frequency side and a high-frequency side from among the filters and/or a weight that amplifies the subband signals corresponding to the filters on a medium frequency side including a relatively low-frequency side and a relatively high-frequency side and/or a weight that increases or reduces the subband signals corresponding to the filters that have the predetermined orientations.

11. An image processing apparatus for supporting breast cancer diagnosis, the image processing apparatus comprising a storing unit and a control unit,
the storing unit comprising:

a filter storing unit that stores a filter that relatively amplifies medium band components between high and low frequency bands and/or a filter that increases or reduces components having predetermined orientations; and
an image data storing unit that stores image data of a mammographic image; and
the control unit comprising an image processing unit that generates processed image data in which distortion due to breast cancer is enhanced by performing image processing by using the filter.

12. A printing medium on which a processed image is printed for supporting breast cancer diagnosis,
wherein,
in the processed image, medium band components between high and low frequency bands in a mammographic original image are relatively amplified and/or
components having predetermined orientations in the mammographic original image are increased or reduced.

13. A computer readable recording medium in which image data for displaying a processed image for supporting breast cancer diagnosis is recorded,
wherein,
in the processed image, medium band components between high and low frequency bands in a mammographic original image are relatively amplified and/or components having predetermined orientations in the mammographic original image are increased or reduced.

14. An image processing method for supporting breast cancer diagnosis performed by a computer including at least a storing unit and a control unit,
the storing unit comprising:

a filter storing unit that stores a filter that relatively amplifies medium band components between high and low frequency bands and/or a filter that increases or reduces components having predetermined orientations; and
an image data storing unit that stores image data of a mammographic image; and
the image processing method comprising an image processing step of generating processed image data in which distortion due to breast cancer is enhanced by performing image processing on the image data with the filter.

15. A program for supporting breast cancer diagnosis performed by a computer including a storing unit and a control unit,
the storing unit comprising:

a filter storing unit that stores a filter that relatively amplifies medium band components between high and low frequency bands and/or a filter that increases or reduces components having predetermined orientations; and
an image data storing unit that stores image data of a mammographic image; and
the program causing the control unit to execute an image processing step of generating processed image data in which distortion due to breast cancer is enhanced by performing image processing on the image data with the filter.

# FIG.1

IMAGE PROCESSING APPARATUS ~100

112 — INPUT DEVICE    OUTPUT DEVICE ~114

INPUT/OUTPUT CONTROL INTERFACE UNIT ~108

**STORING UNIT** ~106

FILTER FILE ~106a

IMAGE DATA FILE ~106b

**CONTROL UNIT** ~102

FILTER PROCESSING UNIT ~102a

DECOMPOSING UNIT ~102b

RECONSTRUCTING UNIT ~102c

WEIGHTING UNIT ~102d

IMAGE SIZE AND LIGHTNESS ADJUSTING UNIT ~102e

COLOR SPACE CONVERSION UNIT ~102f

PROCESSED IMAGE OUTPUT UNIT ~102g

COMMUNICATION CONTROL INTERFACE UNIT ~104

EXTERNAL SYSTEM ~200

NETWORK ~300

EP 2 942 013 A1

# FIG.2

# FIG.3

# FIG.4

# FIG.5

EP 2 942 013 A1

| $d_k(1)$ | $d_k(2)$ | $d_k(3)$ | $d_k(4)$ | $d_k(5)$ | $d_k(6)$ | $d_k(7)$ | $a_k$ | | $d_k(64)$ | $d_k(65)$ | $d_k(66)$ | $d_k(67)$ | $d_k(68)$ | $d_k(69)$ |
|---|---|---|---|---|---|---|---|---|---|---|---|---|---|---|
| $d_k(8)$ | $d_k(9)$ | $d_k(10)$ | $d_k(11)$ | $d_k(12)$ | $d_k(13)$ | $d_k(14)$ | $d_k(15)$ | | $d_k(70)$ | $d_k(71)$ | $d_k(72)$ | $d_k(73)$ | $d_k(74)$ | $d_k(75)$ |
| $d_k(16)$ | $d_k(17)$ | $d_k(18)$ | $d_k(19)$ | $d_k(20)$ | $d_k(21)$ | $d_k(22)$ | $d_k(23)$ | | $d_k(76)$ | $d_k(77)$ | $d_k(78)$ | $d_k(79)$ | $d_k(80)$ | $d_k(81)$ |
| $d_k(24)$ | $d_k(25)$ | $d_k(26)$ | $d_k(27)$ | $d_k(28)$ | $d_k(29)$ | $d_k(30)$ | $d_k(31)$ | | $d_k(82)$ | $d_k(83)$ | $d_k(84)$ | $d_k(85)$ | $d_k(86)$ | $d_k(87)$ |
| $d_k(32)$ | $d_k(33)$ | $d_k(34)$ | $d_k(35)$ | $d_k(36)$ | $d_k(37)$ | $d_k(38)$ | $d_k(39)$ | | $d_k(88)$ | $d_k(89)$ | $d_k(90)$ | $d_k(91)$ | $d_k(92)$ | $d_k(93)$ |
| $d_k(40)$ | $d_k(41)$ | $d_k(42)$ | $d_k(43)$ | $d_k(44)$ | $d_k(45)$ | $d_k(46)$ | $d_k(47)$ | | $d_k(94)$ | $d_k(95)$ | $d_k(96)$ | $d_k(97)$ | $d_k(98)$ | $d_k(99)$ |
| $d_k(48)$ | $d_k(49)$ | $d_k(50)$ | $d_k(51)$ | $d_k(52)$ | $d_k(53)$ | $d_k(54)$ | $d_k(55)$ | | | | | | | |
| $d_k(56)$ | $d_k(57)$ | $d_k(58)$ | $d_k(59)$ | $d_k(60)$ | $d_k(61)$ | $d_k(62)$ | $d_k(63)$ | | | | | | | |

## FIG.6

| $b_{k,1}$ | $b_{k,2}$ | $b_{k,3}$ | $b_{k,4}$ | $b_{k,5}$ | $b_{k,6}$ | $b_{k,7}$ | $a_{k,1}$ |
|---|---|---|---|---|---|---|---|
| $b_{k,8}$ | $b_{k,9}$ | $b_{k,10}$ | $b_{k,11}$ | $b_{k,12}$ | $b_{k,13}$ | $b_{k,14}$ | $b_{k,15}$ |
| $b_{k,16}$ | $b_{k,17}$ | $b_{k,18}$ | $b_{k,19}$ | $b_{k,20}$ | $b_{k,21}$ | $b_{k,22}$ | $b_{k,23}$ |
| $b_{k,24}$ | $b_{k,25}$ | $b_{k,26}$ | $b_{k,27}$ | $b_{k,28}$ | $b_{k,29}$ | $b_{k,30}$ | $b_{k,31}$ |
| $b_{k,32}$ | $b_{k,33}$ | $b_{k,34}$ | $b_{k,35}$ | $b_{k,36}$ | $b_{k,37}$ | $b_{k,38}$ | $b_{k,39}$ |
| $b_{k,40}$ | $b_{k,41}$ | $b_{k,42}$ | $b_{k,43}$ | $b_{k,44}$ | $b_{k,45}$ | $b_{k,46}$ | $b_{k,47}$ |
| $b_{k,48}$ | $b_{k,49}$ | $b_{k,50}$ | $b_{k,51}$ | $b_{k,52}$ | $b_{k,53}$ | $b_{k,54}$ | $b_{k,55}$ |
| $b_{k,56}$ | $b_{k,57}$ | $b_{k,58}$ | $b_{k,59}$ | $b_{k,60}$ | $b_{k,61}$ | $b_{k,62}$ | $b_{k,63}$ |

| $b_{k,64}$ | $b_{k,65}$ | $b_{k,66}$ | $b_{k,67}$ | $b_{k,68}$ | $b_{k,69}$ |
|---|---|---|---|---|---|
| $b_{k,70}$ | $b_{k,71}$ | $b_{k,72}$ | $b_{k,73}$ | $b_{k,74}$ | $b_{k,75}$ |
| $b_{k,76}$ | $b_{k,77}$ | $b_{k,78}$ | $b_{k,79}$ | $b_{k,80}$ | $b_{k,81}$ |
| $b_{k,82}$ | $b_{k,83}$ | $b_{k,84}$ | $b_{k,85}$ | $b_{k,86}$ | $b_{k,87}$ |
| $b_{k,88}$ | $b_{k,89}$ | $b_{k,90}$ | $b_{k,91}$ | $b_{k,92}$ | $b_{k,93}$ |
| $b_{k,94}$ | $b_{k,95}$ | $b_{k,96}$ | $b_{k,97}$ | $b_{k,98}$ | $b_{k,99}$ |

# FIG.7

```
          ┌─────────────┐
          │    START    │
          └──────┬──────┘
                 │
                 ▼
   ┌──────────────────────────────┐
   │  MULTIRESOLUTION DECOMPOSITION │ ～SA-1
   │        ON IMAGE DATA          │
   └──────────────┬───────────────┘
                  │
                  ▼
   ┌──────────────────────────────┐
   │  ATTENUATE OR AMPLIFY SUBBAND  │ ～SA-2
   │           SIGNALS             │
   └──────────────┬───────────────┘
                  │
                  ▼
   ┌──────────────────────────────┐
   │   RECONSTRUCT IMAGE FROM       │
   │ ATTENUATED OR AMPLIFIED SUBBAND│ ～SA-3
   │           SIGNALS             │
   └──────────────┬───────────────┘
                  │
                  ▼
          ┌─────────────┐
          │     END     │
          └─────────────┘
```



# FIG.8

DECOMPOSITION PHASE

SYNTHESIS PHASE

ORIGINAL IMAGE

PROCESSED IMAGE
(RECONSTRUCTED IMAGE DATA)

CASE OF LEVEL 5

APPROXIMATE FILTER

DETAIL FILTER

SUBBAND INFORMATION PROCESSING

EP 2 942 013 A1

# FIG.9

# FIG.10

# FIG.11

# FIG.12

# FIG.13

# FIG.14

## FIG.15

# FIG.16

## FIG.17

## FIG.18

# FIG.19

# FIG.20

# FIG.21

# FIG.22

# FIG.23

# FIG.24

# FIG.25

# FIG.26

# FIG.27

# FIG.28

# FIG.29

# FIG.30

## FIG.31

## FIG.32

<div align="center">**INTERNATIONAL SEARCH REPORT**</div>

| | International application No. |
|---|---|
| | PCT/JP2014/052596 |

**A. CLASSIFICATION OF SUBJECT MATTER**
*A61B6/00*(2006.01)i, *G06T1/00*(2006.01)i

According to International Patent Classification (IPC) or to both national classification and IPC

**B. FIELDS SEARCHED**

Minimum documentation searched (classification system followed by classification symbols)
A61B6/00, G06T1/00, G06T7/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | CHAKRABORTY Jayasree et al., Statistical measures of orientation of texture for the detection of architectural distortion in prior mammograms of interval-cancer, Journal of Electronic Imaging, 2012.07, Vol.21 No.3, Page.033010.1-033010.13 | 1 |
| X | JP 2012-161497 A (Konica Minolta Medical & Graphic, Inc.), 30 August 2012 (30.08.2012), paragraphs [0016] to [0052] (Family: none) | 1,11-15 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 April, 2014 (09.04.14) | 22 April, 2014 (22.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/052596

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-503961 A (Arch Development Corp.), 14 April 1998 (14.04.1998), entire text; all drawings & US 5657362 A & EP 757544 A & WO 1996/025879 A1 & DE 69638305 D & AU 5170196 A & CA 2188394 A & AU 706993 B & AT 491393 T | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012067254 A

### Non-patent literature cited in the description

- **GORGEL P ; SERTBAS A ; UCAN ON.** A Wavelet-based mammographic image denoising and enhancement with homomorphic filtering. *J Med Syst.,* 30 November 2010, vol. 34 (6), 993-1002
- **KILIC N ; GORGEL P ; UCAN ON ; SERTBAS A.** Mammographic Mass Detection using Wavelets as Input to Neural Networks. *J Med Syst.,* 30 November 2010, vol. 34 (6), 1083-1088
- **REGENTOVA E ; ZHANG L ; ZHENG J ; VENI G.** Detecting microcalcifications in digital mammograms using wavelet domain hidden Markov tree model. *Conf Proc IEEE Eng Med Biol Soc.,* 2006, 1972-1975
- **PANETTA K ; ZHOU Y ; AGAIAN S ; JIA H.** Nonlinear unsharp masking for mammogram enhancement. *IEEE Trans Inf Technol Biomed.,* November 2011, vol. 15 (6), 918-928
- **QIAN W ; CLARKE LP ; KALLERGI M ; CLARK RA.** Tree-structured nonlinear filters in digital mammography. *IEEE Trans Med Imaging.,* 1994, vol. 13 (1), 25-36
- **AYRES FJ ; RANGAYYAN RM.** Reduction of false positives in the detection of architectural distortion in mammograms by using a geometrically constrained phase portrait model. *International Journal of Computer Assisted Radiology and Surgery,* 2007, vol. 1 (6), 361-369
- **HITOSHI ARAI ; SHINOBU ARAI.** 2D tight framelets with orientation selectivity suggested by vision science. *JSIAM Letters,* 2009, vol. 1, 9-12
- **HITOSHI ARAI.** Wavelet. Kyoritsu Shuppan Co., Ltd, 2010
- **HITOSHI ARAI ; SHINOBU ARAI.** Finite discrete, shift-invariant, directional filterbanks for visual information processing, I: Construction. *Interdisciplinary Information Sciences,* 2007, vol. 13, 255-273
- **HITOSHI ARAI.** Fourier Analysis. Asakura Publishing Co., Ltd, 2003